# EUROPÄISCHE PATENTSCHRIFT

(11) **EP 3 608 597 B1**
(45) Veröffentlichungstag und Bekanntmachung des Hinweises auf die Patenterteilung: **07.06.2023**
(21) Anmeldenummer: 19188581.3
(22) Anmeldetag: 26.07.2019
(51) Int. Cl.: F24D 19/00, F16K 11/083, F16K 11/07, F16K 11/085

(54) **ANSCHLUSSARMATUR ZUR STEUERUNG DER FLUSSRICHTUNG EINES HEIZUNGSMEDIUMS IN EINEM HEIZKÖRPER**
CONNECTION FITTING FOR CONTROLLING THE FLOW DIRECTION OF A HEATING MEDIUM IN A HEATING BODY
ARMATURE DE RACCORDEMENT PERMETTANT DE COMMANDER LE SENS D'ÉCOULEMENT D'UN MILIEU DE CHAUFFAGE DANS UN RADIATEUR

(30) Priorität: 09.08.2018 AT 506812018
(43) Veröffentlichungstag der Anmeldung: 12.02.2020
(73) Patentinhaber: Purmo Group Oy Ab, 00121 Helsinki (FI)
(72) Erfinder: VISENTIN, Eros, 33080 Porcia (PN) (IT); BRUSADIN, Luca, 33170 Pordenone (IT)
(74) Vertreter: Wildhack & Jellinek

(56) Entgegenhaltungen:
- EP-A1- 2 843 276
- DE-A1- 4 419 278
- DE-A1- 19 607 694
- DE-A1- 19 854 848
- DE-C2- 3 430 860

## Beschreibung

Die Erfindung betrifft eine Anschlussarmatur gemäß dem Oberbegriff des Patentanspruchs 1.

Aus dem Stand der Technik ist eine Vielzahl von Anschlussarmaturen bekannt, mit denen beispielsweise die Rohre von Heizleitungen mit Heizkörpern oder anderen Heiz- und Kühlvorrichtungen verbunden werden können. Die aus dem Stand der Technik bekannten Anschlussarmaturen sind meistens als sogenannte Hahnblöcke, also als Anschlusshähne ausgebildet, bei denen zwei parallele Kanäle, jeweils einer für den Vorlauf und den Rücklauf, ausgebildet sind. Der Vorlauf- und der Rücklaufkanal kann jeweils bei aus dem Stand der Technik bekannten Anschlussarmaturen meist getrennt voneinander. abgesperrt werden und so der Durchfluss in einen Heizkörper oder aus dem Heizkörper heraus unterbunden werden. Nachteil der aus dem Stand der Technik bekannten Hahnblöcke und Anschlussarmaturen ist es jedoch, dass derartige Hahnblöcke bei Austausch von Heizkörpern oder im Renovierungsfall meist mit den Heizkörpern ausgetauscht werden müssen und beispielsweise bei verkehrt verlegten Leitungen, die meist unter Putz verlegt sind, ausgetauscht werden müssen, was einen hohen Umbau- bzw. Renovierungsaufwand bedeutet.

Aus dem Stand der Technik sind weiters Verfahren bekannt geworden, mit denen herkömmliche Heizleitungen auch zum Kühlen verwendet werden können. Nachteil bei Verwendung aus dem Stand der Technik bekannter Hahnblöcke für diese Verfahren und Anlagen bestehen darin, dass vor allem im Kühlvorgang eine unvorteilhafte Durchströmung des Kühlkörpers erreicht wird und eine Stromumkehr des Fluids und somit bessere Durchströmung des Kühlkörpers nicht erreicht werden kann.

Die Dokumente DE 196 07 694 A1, DE 34 30 860 A, DE 198 54 848 A1 offenbaren Anschlussarmaturen mit den Merkmalen des Oberbegriffs des Anspruchs 1.

Aufgabe der vorliegenden Erfindung ist es somit, einen Hahnblock bereitzustellen, der eine breite Anwendung ermöglicht und ohne großen Aufwand variabel durchströmt werden kann.

Die vorliegende Aufgabe wird durch die kennzeichnenden Merkmale des Anspruchs 1 gelöst. Dabei ist vorgesehen, dass das Gehäuse eine, insbesondere normal zum Vorlaufannahmestutzen und/oder Vorlaufabgabestutzen und/oder Rücklaufabgabestutzen und/oder Rücklaufannahmestutzen angeordnete, Zentralausnehmung aufweist, die den Vorlaufannahmestutzen, den Vorlaufabgabestutzen, den Rücklaufabgabestutzen und den Rücklaufannahmestutzen fluidübertragend miteinander verbindet,
dass in der Zentralausnehmung ein in seiner Längsachse verschiebbarer Kolben angeordnet ist, der abschnittsweise gegengleich zur Zentralausnehmung ausgebildet ist und an seinem Umfang an der Wandung der Zentralausnehmung zumindest abschnittsweise anlegbar ist,
   - wobei der Kolben zumindest einen im Inneren des Kolbens verlaufenden Kanal aufweist,
   - wobei der Kolben eine Anzahl von Freistellungen aufweist, die sich jeweils über einen Teil des Umfangs des Kolbens erstrecken und zueinander beabstandet und durch den Werkstoff des Kolbens oder Dichtelemente getrennt sind,
und dass der Kolben aus einer Paralleldurchströmungsstellung in eine Kreuzdurchströmungsstellung in seiner Längsachse verschiebbar ist, wobei der Kanal und die Freistellungen derart ausgebildet und zueinander angeordnet sind,
   - dass in der Paralleldurchströmungsstellung des Kolbens Heizungsmedium vom Vorlaufannahmestutzen über den Kanal oder eine der Freistellungen zum Vorlaufabgabestutzen und Heizungsmedium vom Rücklaufannahmestutzen über den Kanal oder eine der Freistellungen zum Rücklaufabgabestutzen fließen kann und der Durchfluss von Heizungsmedium vom Vorlaufannahmestutzen zum Rücklaufabgabestutzen und zum Rücklaufannahmestutzen und umgekehrt unterbunden ist, und
   - dass in der Kreuzdurchströmungsstellung des Kolbens Heizungsmedium vom Vorlaufannahmestutzen über den Kanal oder eine der Freistellungen zum Rücklaufannahmestutzen und Heizungsmedium vom Vorlaufabgabestutzen über den Kanal oder eine der Freistellungen zum Rücklaufannahmestutzen fließen kann und der Durchfluss von Heizungsmedium vom Vorlaufannahmestutzen zum Rücklaufabgabestutzen und zum Vorlaufabgabestutzen und umgekehrt unterbunden ist.

Durch die Möglichkeit der Verstellung des Kolbens aus der Paralleldurchströmungsstellung in die Kreuzdurchströmungsstellung kann beispielsweise ein verkehrt verlegter Anschluss bzw. falsch verlegte Leitungen kompensiert werden und beispielsweise im Renovierungsfall Flachheizkörper durch Röhrenradiatoren ohne Austausch des Hahnblockes oder der Leitungen ermöglicht werden. Weiters ist es möglich, den Massenstrom im Kühlfall umzukehren, wodurch eine bessere Durchströmung des Kühlkörpers und damit eine höhere Leistungsabgabe und Kühlwirkung ermöglicht wird.

Durch die erfindungsgemäße Ausbildung wird eine kostengünstige und fertigungstechnisch einfache Ausführung eines Hahnblockes erreicht, die mit wenigen Komponenten, nämlich dem Gehäuse und dem Kolben auskommt und daher auch einfach zu warten oder zu reparieren ist. Durch die einfache Ausführung wird weiters eine hohe Lebensdauer und Betriebssicherheit gewährleistet, die gerade bei Heiz- und Kühlmedien besonders vorteilhaft ist.

Weitere Vorteile werden durch die Merkmale der abhängigen Ansprüche definiert:
Um einzelne Heizkörper oder Kühlkörper abschalten zu können, kann vorgesehen sein, dass der Kolben aus einer Paralleldurchströmungsstellung in eine Kreuzdurchströmungsstellung oder eine Absperrstellung in seiner Längsachse verschiebbar ist,
wobei der Kanal und die Freistellungen, derart ausgebildet und zueinander angeordnet sind,
dass in der Absperrstellung des Kolbens der Durchfluss von Heizungsmedium durch die Anschlussarmatur unterbunden ist.

Durch Verschieben des Kolbens in eine Absperrstellung ist es einfach möglich, den Durchfluss des Heiz- oder Kühlmediums durch den Hahnblock zu unterbinden und so den Heizkörper oder Kühlkörper ohne Stilllegung des Heiz- und Kühlkreislaufes auszutauschen oder abzubauen.

Vorteilhaft kann vorgesehen sein, dass der Kolben aus einer Paralleldurchströmungsstellung in eine Kreuzdurchströmungsstellung oder eine Absperrstellung oder eine Bypassstellung in seiner Längsachse verschiebbar ist,
wobei der Kanal und die Freistellungen, derart ausgebildet und zueinander angeordnet sind,
dass in der Bypassstellung des Kolbens Heizungsmedium von dem Vorlaufannahmestutzen zum Rücklaufabgabestutzen oder umgekehrt fließen kann und der Durchfluss von Heizungsmedium zum Vorlaufabgabestutzen und dem Rücklaufannahmestutzen unterbunden ist.

Durch Verschieben des Kolbens in die Bypassstellung kann beispielsweise bei Einrohrheizungssystemen der an dem Hahnblock angeschlossene Heizkörper abgestellt werden, ohne dass der Heizkreislauf unterbrochen wird. So können im Renovierungs-, Wartungs- oder Austauschfall einzelne Heizkörper abgeschalten werden und andere, nicht von der Renovierung oder dem Austausch betroffene Heizkörper, weiter betrieben werden.

Eine vorteilhafte Ausführungsform wird bereitgestellt, indem die Achsen des Vorlaufannahmestutzens und des Vorlaufabgabestutzens in einer Vorlaufebene liegen, die normal zur Längsachse des Kolbens angeordnet ist und dass der Rücklaufabgabestutzen und Rücklaufannahmestutzen in einer Rücklaufebene liegen, die normal zur Längsachse des Kolbens angeordnet ist, wobei die Vorlaufebene und die Rücklaufebene entlang der Längsachse zueinander beabstandet sind,
dass der Kolben zwei Freistellungen aufweist, wobei die erste Freistellung sich über einen Umfangsabschnitt des Kolbens im Bereich der Vorlaufebene erstreckt und die zweite Freistellung sich über einen Umfangsabschnitt des Kolbens im Bereich der Rücklaufebene erstreckt,
dass der Kolben zwei Kanäle aufweist, wobei die Kanäle jeweils einen parallel zur Längsachse des Kolbens verlaufenden Parallelabschnitt und jeweils zwei normal zur Längsachse des Kolbens verlaufende Radialabschnitte aufweisen,
wobei die Parallelabschnitte sich jeweils in den Bereich der Vorlaufebene und Rücklaufebene erstrecken,
wobei jeweils der erste Radialabschnitt der Kanäle im Bereich der Vorlaufebene und der zweite Radialabschnitt der Kanäle im Bereich der Rücklaufebene angeordnet ist,
wobei der erste Radialabschnitt des ersten Kanals in die erste Freistellung mündet und der zweite Radialabschnitt des ersten Kanals in den von der zweiten Freistellung nicht freigestellten Bereich des Kolbens in dessen Umfangsfläche mündet,
wobei der erste Radialabschnitt des zweiten Kanals in den von der ersten Freistellung nicht freigestellten Bereich des Kolbens in dessen Umfangsfläche mündet und der zweite Radialabschnitt des zweiten Kanals in die zweite Freistellung mündet.

Eine weitere vorteilhafte Ausführungsform der erfindungsgemäßen Anschlussarmatur wird bereitgestellt, indem die Achsen des Vorlaufannahmestutzen und des Vorlaufabgabestutzen in einer Vorlaufebene liegen, die normal zur Längsachse des Kolbens angeordnet ist und dass der Rücklaufabgabestutzen und Rücklaufannahmestutzen in einer Rücklaufebene liegen, die normal zur Längsachse des Kolbens angeordnet ist, wobei die Vorlaufebene und die Rücklaufebene entlang der Längsachse zueinander beabstandet sind, dass der Kolben einen Kanal und drei Freistellungen aufweist, wobei die erste Freistellung sich über einen Umfangsabschnitt des Kolbens im Bereich der Vorlaufebene erstreckt und die zweite Freistellung sich über einen Umfangsabschnitt des Kolbens im Bereich der Rücklaufebene erstreckt, wobei die erste Freistellung und die zweite Freistellung sich über den gleichen Umfangsabschnitt des Kolbens erstrecken,
wobei die mittlere Freistellung zwischen der ersten Freistellung und der zweiten Freistellung angeordnet ist und zu diesen durch nicht freigestelltes Material des Kolbens oder Dichtelemente getrennt ist und einen im wesentlichen über den Umfang in Bezug zur Längsachse des Kolbens von der Vorlaufebene zur Rücklaufebene diagonal angeordneten Verlauf aufweist,
wobei der Kanal einen parallel zur Längsachse, insbesondere in der Längsachse, des Kolbens verlaufenden Parallelabschnitt und zwei normal zur Längsachse des Kolbens verlaufende Radialabschnitte aufweist,
wobei der erste Radialabschnitt im Bereich der Vorlaufebene angeordnet ist und sich vom Parallelabschnitt des Kanals nach außen in den nicht freigestellten Bereich des Kolbens erstreckt und in dessen Umfangsfläche mündet,
wobei der zweite Radialabschnitt im Bereich der Rücklaufebene angeordnet ist und sich vom Parallelabschnitt des Kanals nach außen in den nicht freigestellten Bereich des Kolbens erstreckt und in dessen Umfangsfläche mündet,
wobei die Mündung des ersten Radialabschnitts und die Mündung des zweiten Radialabschnitts am Umfang des Kolbens über 180° versetzt zueinander angeordnet und jeweils in der Vorlaufebene und der Rücklaufebene um 180° zur dritten Freistellung versetzt angeordnet sind.

Eine weitere vorteilhafte Ausführungsform der erfindungsgemäßen Anschlussarmatur wird bereitgestellt, indem die Achsen des Vorlaufannahmestutzens und des Vorlaufabgabestutzens in einer Vorlaufebene liegen, die normal zur Längsachse des Kolbens angeordnet ist und dass der Rücklaufabgabestutzen und Rücklaufannahmestutzen in einer Rücklaufebene liegen, die normal zur Längsachse des Kolbens angeordnet ist, wobei die Vorlaufebene und die Rücklaufebene entlang der Längsachse zueinander beabstandet sind,
wobei der Kolben einen äußeren Kolbenteil und einen inneren Kolbenteil umfasst, wobei der äußere Kolbenteil hohlzylinderförmig ausgebildet ist und an seinem Außenumfang an der Wandung der Zentralausnehmung zumindest abschnittsweise anlegbar ist und in der Zentralausnehmung entlang der Längsachse des Kolbens verstellbar ist,
wobei der innere Kolbenteil im äußeren Kolbenteil angeordnet ist und mit seinem Außenumfang an dem Innenumfang des äußeren Kolbenteils zumindest abschnittsweise anlegbar ist und zum äußeren Kolbenteil entlang der Längsachse des Kolbens relativ verstellbar ist,
wobei der Kanal im Inneren des inneren Kolbenteils, insbesondere in der Längsachse, verläuft,
wobei der Vorlaufannahmestutzen, der Vorlaufabgabestutzen, der Rücklaufabgabestutzen und der Rücklaufannahmestutzen mit der Zentralausnehmung jeweils über eine Durchtrittsöffnung fluidübertragend verbunden sind, wobei die Durchtrittsöffnungen des Vorlaufannahmestutzens und des Vorlaufabgabestutzens in der Vorlaufebene jeweils in Richtung der Längsachse an einer Seite der Vorlaufebene angeordnet sind und in Richtung der Längsachse zueinander beabstandet sind, wobei die Durchtrittsöffnung des Rücklaufabgabestutzen und des Rücklaufannahmestutzen in der Rücklaufebene jeweils in Richtung der Längsachse an einer Seite der Rücklaufebene angeordnet sind und in Richtung der Längsachse zueinander beabstandet sind,
wobei der äußere Kolbenteil vier Durchtrittsfenster aufweist, die jeweils am Umfang des äußeren Kolbenteils in Richtung der Längsachse hintereinander angeordnet und zueinander beanstandet sind, wobei der Abstand zwischen dem ersten Durchtrittsfenster und dem zweiten Durchtrittsfenster in Richtung der Längsachse ungefähr dem Abstand zwischen den Durchtrittsöffnungen des Vorlaufannahmestutzens und des Vorlaufabgabestutzens entspricht, wobei der Abstand zwischen dem dritten Durchtrittsfenster und dem vierten Durchtrittsfenster in Richtung der Längsachse ungefähr dem Abstand zwischen den Durchtrittsöffnungen des Rücklauflaufannahmestutzens und des Rücklauflaufabgabestutzens entspricht, und wobei der Abstand zwischen dem zweiten Durchtrittsfenster und dem dritten Durchtrittsfenster in Richtung der Längsachse ungefähr dem Abstand zwischen den Durchtrittsöffnungen des Rücklauflaufannahmestutzens und dem Vorlaufannahmestutzen entspricht,
wobei jeweils im Bereich der vier Durchtrittsfenster je eine Freistellung vorgesehen ist, die jeweils über den äußeren Umfang des äußeren Kolbenteils verläuft und jeweils von der benachbarten Freistellung durch zumindest einen Steg fluiddicht getrennt ist,
wobei der Innere Kolbenteil eine Strömungsöffnung, die den Kanal mit dem äußeren Umfang des Inneren Kolbenteils verbindet, und eine über den Außenumfang des inneren Kolbenteils entlang der Längsachse verlaufende Umfangsfreistellung aufweist, wobei der Abstand von dem Ende des inneren Kolbenteils, das in der Vorlaufebene angeordnet ist, zur Strömungsöffnung ungefähr dem Abstand der Vorlaufebene zur Rücklaufebene entspricht,
und wobei die Länge der Umfangsfreistellung in Richtung der Längsachse ungefähr dem Abstand zwischen dem zweiten Durchtrittsfenster und dem dritten Durchtrittsfenster in Richtung der Längsachse entspricht.

Um besser gewährleisten zu können, dass einzelne Betriebszustände nicht überlappen und daher ein Fehldurchfluss des Heizungsmediums in ungewünschte Richtungen erfolgt, kann vorgesehen sein, dass die Freistellungen sich über einen Umfangsbereich mit einem Winkel von 180° bis 280°, insbesondere 220° bis 260°, erstrecken.

Vorteilhaft kann vorgesehen sein, dass der Kolben und die Zentralausnehmung kegelstumpfförmig ausgebildet sind. Durch die kegelstumpfförmige Ausbildung der Zentralausnehmung und des Kolbens wird eine einfache Abdichtung erreicht, die beispielsweise aus Gasarmaturen bekannt ist.

Um eine Vermischung des Vorlaufs mit dem Rücklauf oder Leckagemengen in der Anschlussarmatur zu verhindern, kann vorgesehen sein, dass die Freistellungen durch Dichtelemente, insbesondere Dichtringe, voneinander abgedichtet oder getrennt sind.

Eine vorteilhafte Verstellung des Kolbens in die einzelnen Stellungen wird erreicht, indem der Kolben manuell oder mittels eines Motors, insbesondere Stepper- oder Schrittmotors, oder einer Feder verstellbar ausgebildet ist.

Eine vorteilhafte Ausbildung der Anschlussarmatur wird erreicht, indem der Vorlaufabgabestutzen und/oder der Rücklaufannahmestutzen und/oder der Vorlaufannahmestutzen und der Rücklaufabgabestutzen parallel zueinander angeordnet sind.

Um einen Heizkörper auch bei horizontal aus einer Wand stehenden Leitungen einfach anschließen zu können, kann vorgesehen sein, dass die Anschlussarmatur als Eckanschlussarmatur ausgebildet ist, wobei der Vorlaufannahmestutzen und der Rücklaufabgabestutzen parallel zueinander angeordnet sind,
wobei der Vorlaufabgabestutzen und der Rücklaufannahmestutzen parallel zueinander angeordnet sind und
wobei der Vorlaufannahmestutzen mit dem Vorlaufabgabestutzen und der Rücklaufabgabestutzen mit dem Rücklaufannahmestutzen jeweils in einem Winkel von 90° angeordnet sind.

Eine einfache Befestigung der Anschlussarmatur an Heizkörpern oder Heizleitungen kann erreicht werden, indem der Vorlaufannahmestutzen und/oder der Vorlaufabgabestutzen und/oder der Rücklaufabgabestutzen und/oder der Rücklaufannahmestutzen als Steckanschluss oder Klemmringverschraubung ausgebildet sind.

Um den Anschluss als Eckarmatur als auch als Hahnblock zu ermöglichen kann vorgesehen sein, dass die Anschlussarmatur zwei Vorlaufannahmestutzen und zwei Rücklaufabgabestutzen aufweist,
wobei jeweils die Achsen eines der Vorlaufannahmestutzen zu jeweils der Achse eines Rücklaufabgabestutzen parallel angeordnet ist,
wobei der erste Vorlaufannahmestutzen in der Längsachse senkrecht zum zweiten Vorlaufannahmestutzen angeordnet ist, und
wobei der erste Rücklaufabgabestutzen in der Längsachse senkrecht zum zweiten Rücklaufabgabestutzen angeordnet ist.

Um beispielsweise bei der Montage oder im Betrieb des Heizkreislaufes zu ermitteln, in welcher Stellung der Kolben sich befindet, kann vorgesehen sein, dass am Gehäuse und/oder dem Kolben Markierungen zur Anzeige der Stellung des Kolbens angeordnet sind.

Eine vorteilhafte Ausbildungsform der erfindungsgemäßen Anschlussarmatur wird bereitgestellt, indem das Gehäuse und/oder der Kolben aus Messing oder einem Kunststoff, insbesondere hergestellt durch ein Spritzgussverfahren, oder aus Hostaform bestehen.

Weitere Vorteile und Ausgestaltungen der Erfindung ergeben sich aus der Beschreibung und den beiliegenden Zeichnungen.

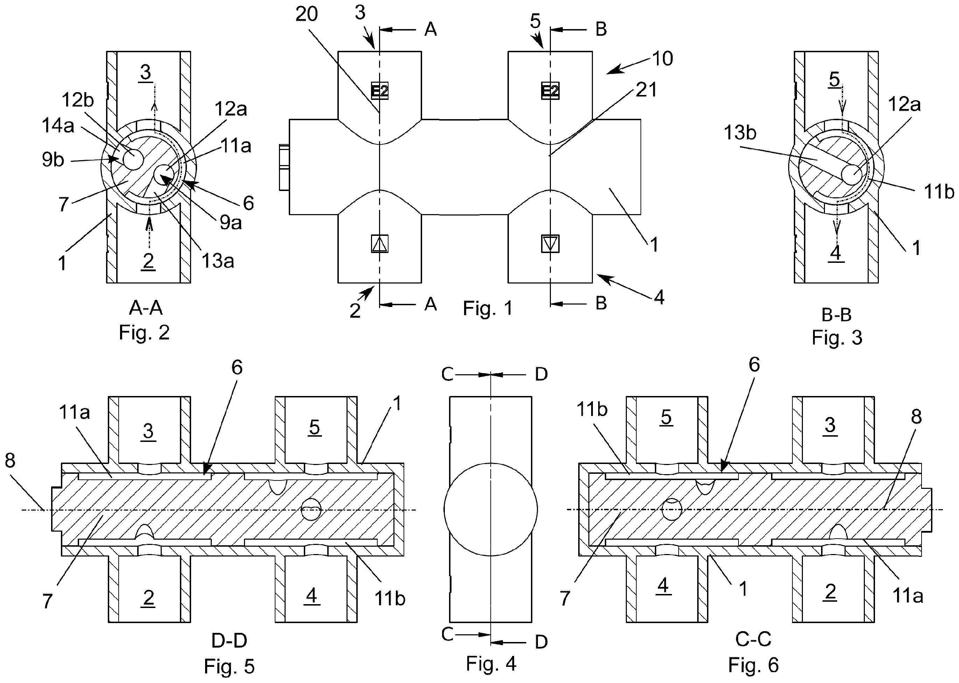

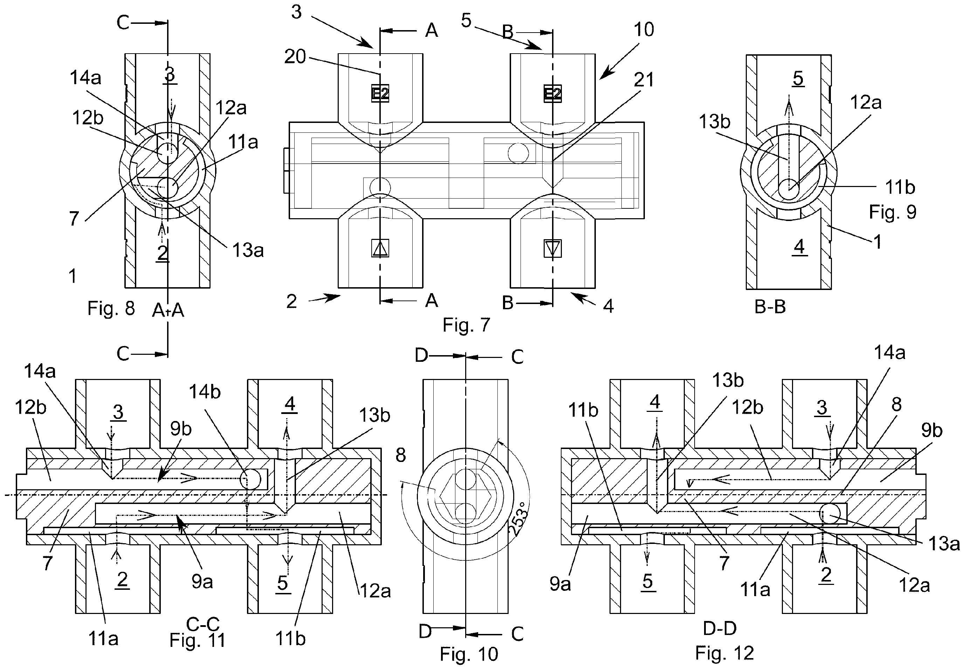

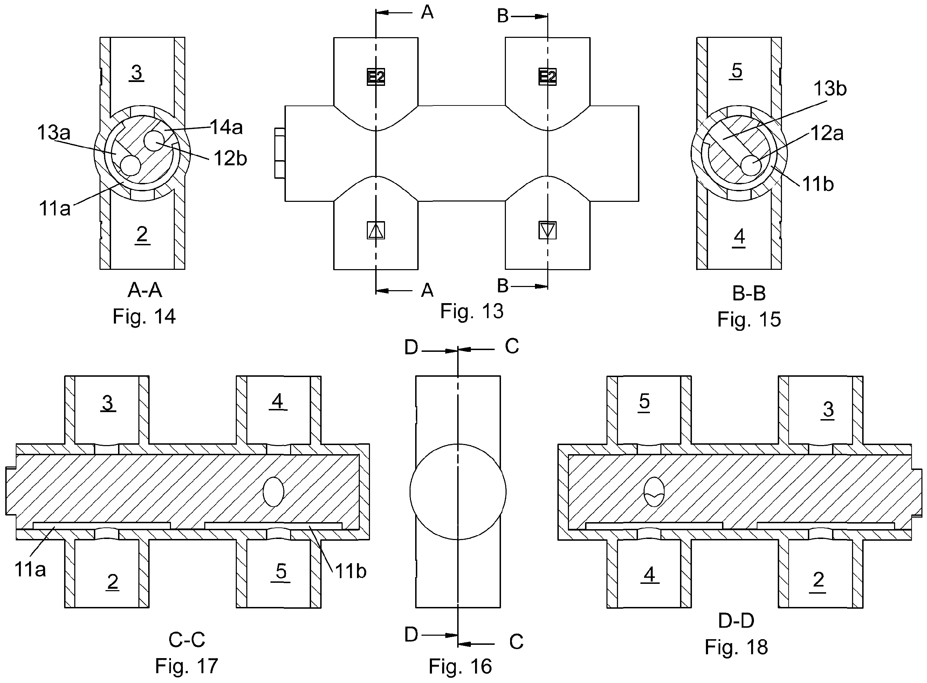

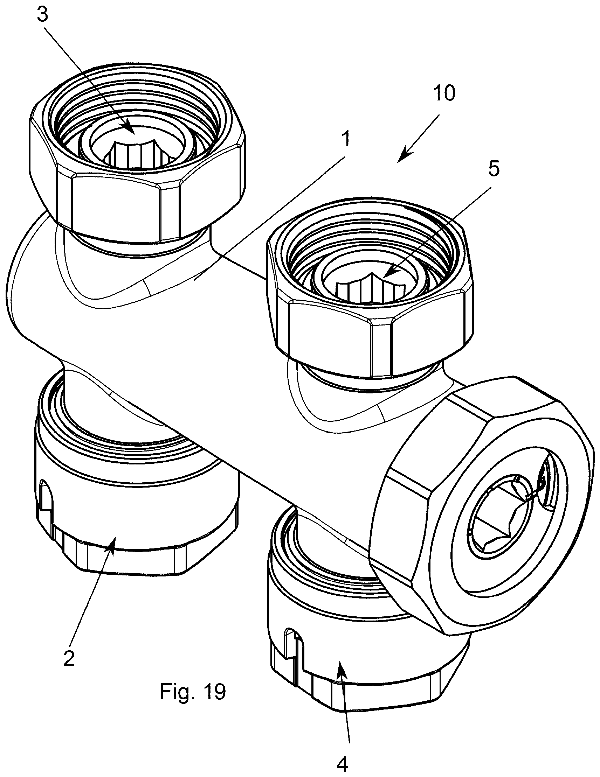

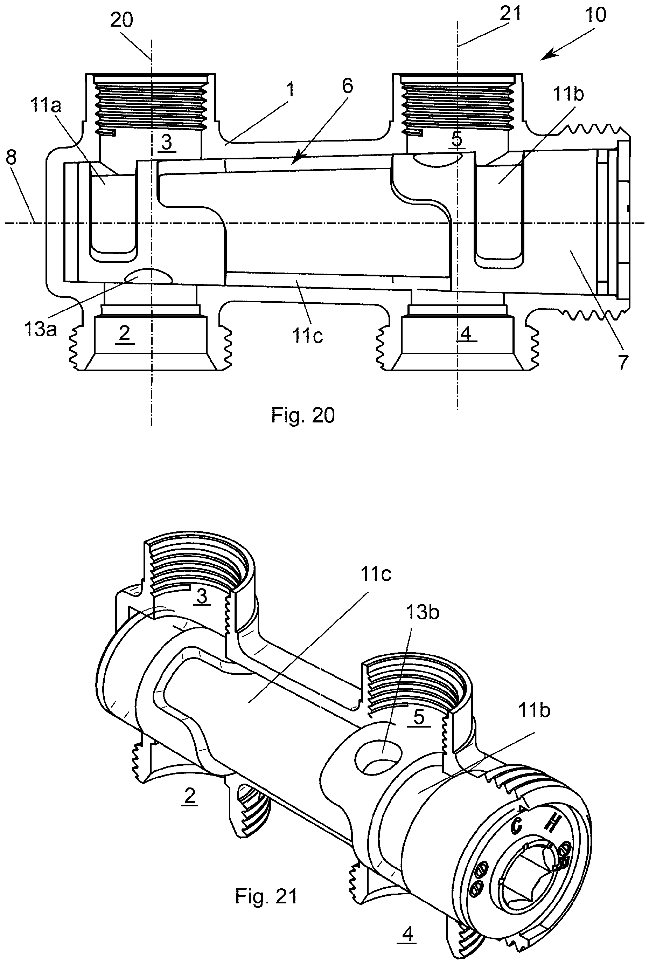

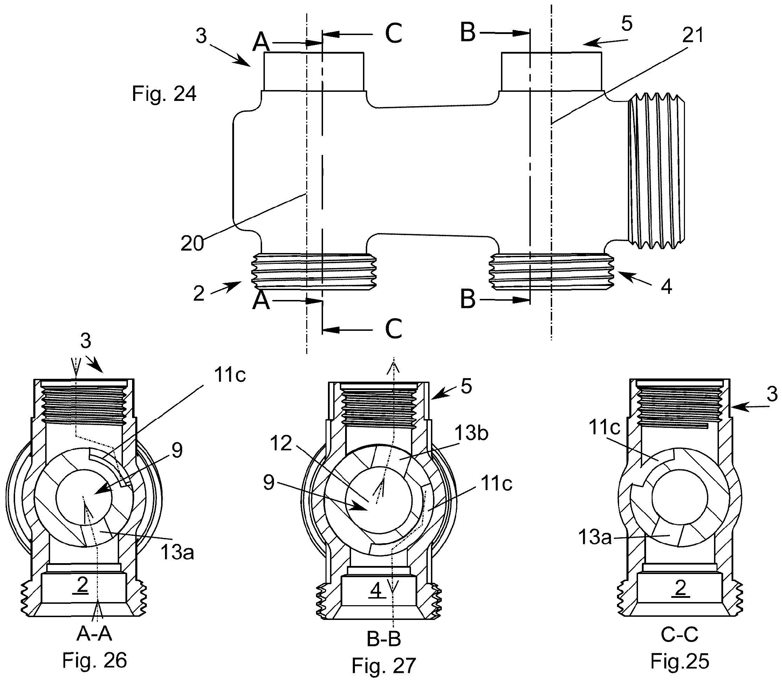

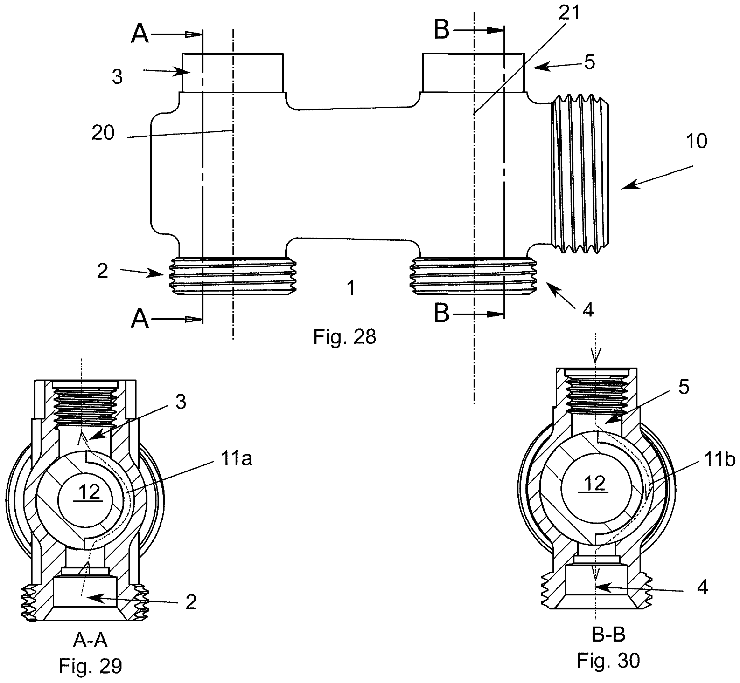

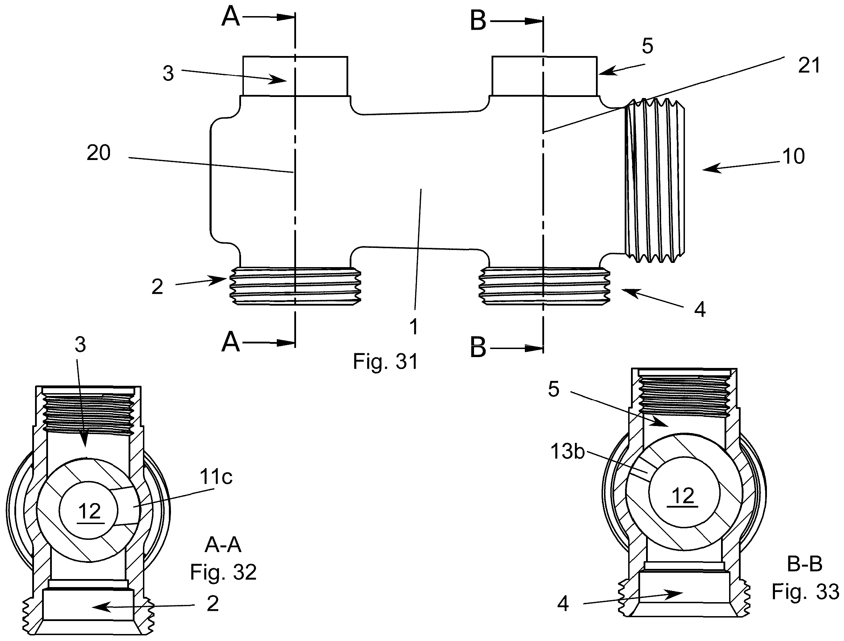

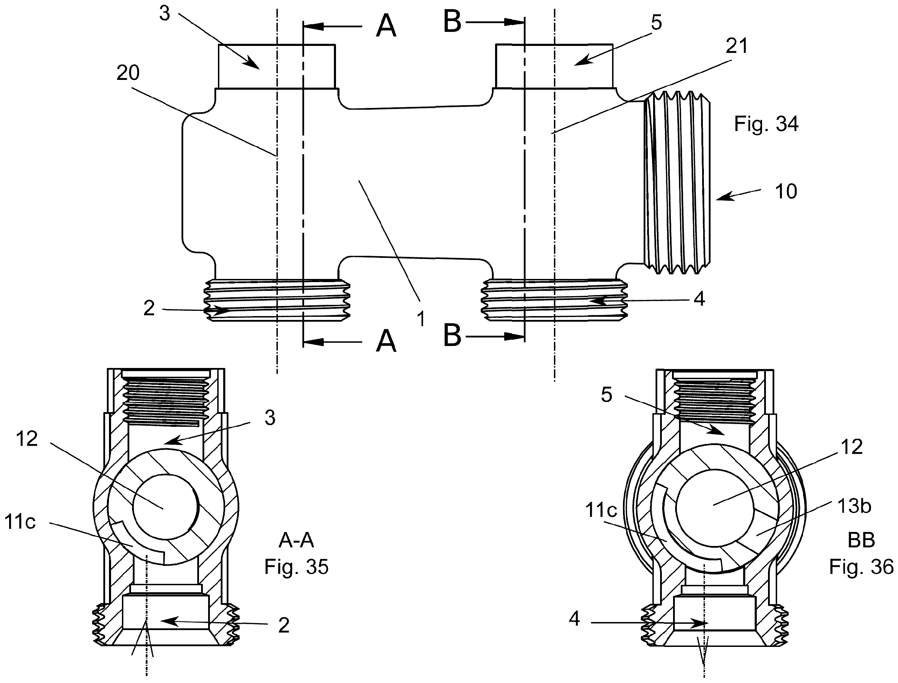

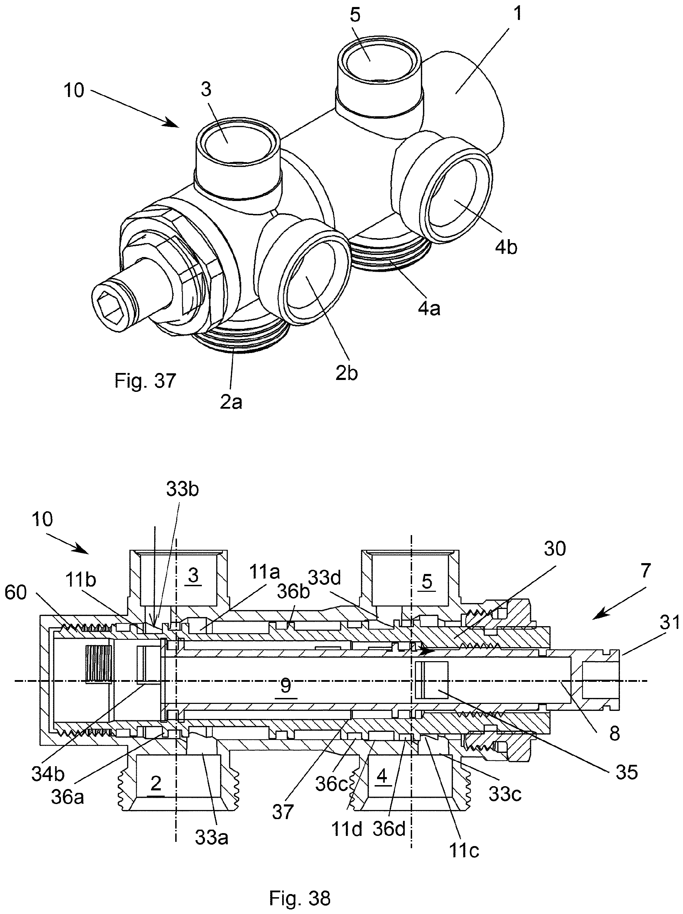

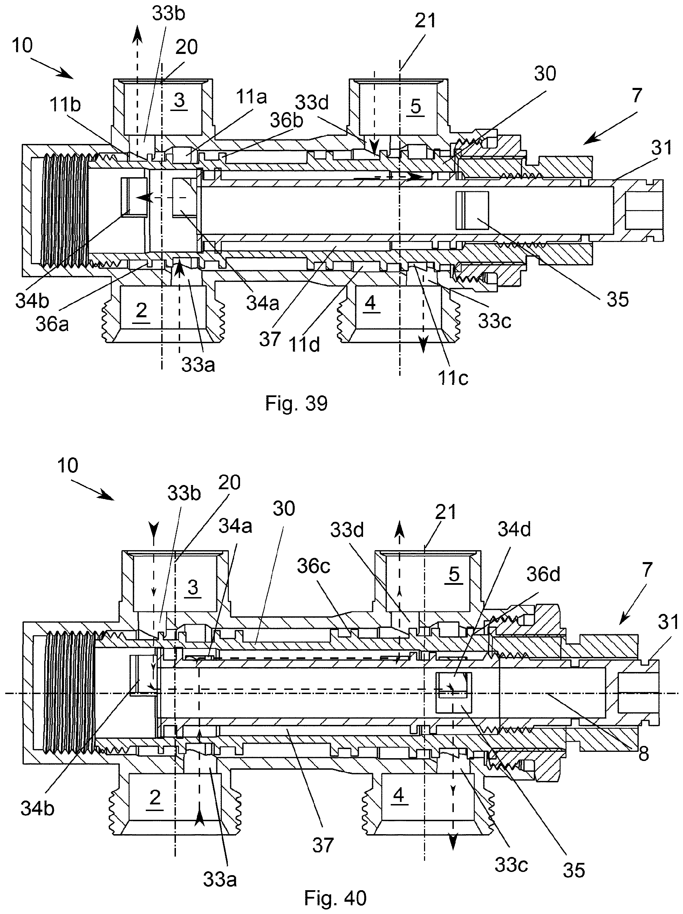

Fig. 1 bis 18 zeigen eine erste Ausführungsform einer nicht erfindungsgemäßen Anschlussarmatur in unterschiedlichen Funktionszuständen, Fig. 1 bis Fig. 6 zeigen die erste Ausführungsform der Anschlussarmatur in Paralleldurchströmungsstellung, Fig. 7 bis Fig. 12 zeigen die erste Ausführungsform der Anschlussarmatur in Kreuzdurchströmungsstellung, Fig. 13 bis Fig. 18 zeigen die erste Ausführungsform der Anschlussarmatur in Absperrstellung, Fig. 19 bis Fig. 36 zeigen eine zweite Ausführungsform einer ebenfalls nicht erfindungsgemäßen Anschlussarmatur, Fig. 19 zeigt eine isometrische Ansicht der zweiten Ausführungsform der Anschlussarmatur, Fig. 20 bis Fig. 27 zeigen die zweite Ausführungsform der Anschlussarmatur in Kreuzdurchströmungsstellung, Fig. 28 bis Fig. 30 zeigen die zweite Ausführungsform der Anschlussarmatur in Paralleldurchströmungsstellung, Fig. 31 bis Fig. 33 zeigen die zweite Ausführungsform der Anschlussarmatur in Absperrstellung, Fig. 34 bis Fig. 36 zeigen die zweite Ausführungsform der Anschlussarmatur in Bypassstellung, Fig. 37 zeigt eine alternative Ausführungsform als Eck- und Parallelanschlussarmatur, Fig. 38 zeigt eine erfindungsgemäße Ausführungsform der Anschlussarmatur in Absperrstellung, Fig. 39 zeigt die erfindungsgemäße Ausführungsform in Paralleldurchströmungsstellung und Fig. 40 die erfindungsgemäße Ausführungsform der Anschlussarmatur in Kreuzdurchströmungsstellung.

Fig. 1 zeigt eine Frontansicht der ersten Ausführungsform einer nicht erfindungsgemäßen Anschlussarmatur 10. In Fig. 2 ist eine Schnittansicht entlang der Schnittebene A-A und in Fig. 3 eine Schnittansicht entlang der Schnittebene B-B dargestellt. Die Fig. 4 zeigt die erste Ausführungsform der Anschlussarmatur 10 in Seitenansicht und die Fig. 5 und 6 Schnittansichten entlang der Längsachse der Anschlussarmatur 10 entlang der Schnittebene D-D (Fig. 5) und entlang der Schnittebene C-C (Fig. 6). Die Anschlussarmatur 10 umfasst ein Gehäuse 1 und ist bei der ersten Ausführungsform als Hahnblock ausgebildet. Die Anschlussarmatur 10 umfasst einen Vorlaufannahmestutzen 2, an dem die Vorlaufleitung einer Heizungsanlage angeschlossen werden kann. Die Anschlussarmatur 10 umfasst weiters einen Rücklaufabgabestutzen 4, an dem die Rücklaufleitung einer Heizungsanlage angeschlossen werden kann. In der Schnittebene A-A liegt dem Vorlaufannahmestutzen 2 der Vorlaufabgabestutzen 3 gegenüber, durch den der Vorlauf aus der Anschlussarmatur 10 beispielsweise in einen Heizkörper abgegeben wird. Dem Rücklaufabgabestutzen 4 liegt in einer Rücklaufebene 21 ein Rücklaufannahmestutzen 5 gegenüber, durch den das aus dem Heizkörper ausströmende Heizmedium als Rücklauf in die Anschlussarmatur 10 eingebracht wird. Die Achsen des Vorlaufannahmestutzens 2 und des Vorlaufabgabestutzens 3 liegen in der Vorlaufebene 20, die normal zur Längsachse der Anschlussarmatur 10 angeordnet ist. Der Rücklaufabgabestutzen 4 und der Rücklaufannahmestutzen 5 liegen in der Rücklaufebene 21, die normal zur Längsachse der Anschlussarmatur 10 angeordnet ist, wobei die Vorlaufebene 20 und die Rücklaufebene 21 entlang der Längsachse der Anschlussarmatur 10 zueinander beabstandet sind. Die Anschlussarmatur 10 weist eine Zentralausnehmung 6 auf, die bei der ersten Ausführungsform zylindrisch ausgebildet ist (Fig. 5, Fig. 6). Die Zentralausnehmung 6 ist normal zum Vorlaufannahmestutzen 2, dem Vorlaufabgabestutzen 3, dem Rücklaufabgabestutzen 4 und dem Rücklaufannahmestutzen 5 angeordnet und verbindet diese fluidtechnisch, also fluidübertragend, miteinander. In der Zentralausnehmung 6 ist ein Kolben 7 angeordnet und eingebracht, der gegengleich zur Zentralausnehmung 6 ausgebildet ist und entlang seiner Längsachse 8 in der Zentralausnehmung 6 verdrehbar gelagert ist. Der Kolben 7 ist zylindrisch ausgebildet und ist im Bereich seiner Enden und in seinem Mittelbereich an die Wandung der Zentralausnehmung 6 angelegt, kann sich aber beispielsweise über eine Spielpassung in dem Gehäuse 1 bzw. der Zentralausnehmung 6 entlang seiner Längsachse 8 verdrehen.

Der Kolben 7 weist zwei Freistellungen 11a, 11b auf, wobei die erste Freistellung 11a sich über einen Umfangsabschnitt des Kolbens 7 im Bereich der Vorlaufebene 20 erstreckt und die zweite Freistellung 11b sich über einen Umfangsabschnitt des Kolbens 7 im Bereich der Rücklaufebene 21 erstreckt. Die erste Freistellung 11a und die zweite Freistellung 11b erstrecken sich dabei über den gleichen Umfangsabschnitt des Kolbens 7, sind also im Querschnitt gesehen deckungsgleich angeordnet (Fig. 2, Fig. 3). Die erste Freistellung 11a und die zweite Freistellung 11b sind durch den Werkstoff des Kolbens 7 im mittleren Bereich des Kolbens 7 voneinander getrennt, wodurch kein Heizfluid aus der ersten Freistellung 11a entlang der Zentralausnehmung 6 in die zweite Freistellung 11b fließen kann (Fig. 5, Fig. 6). In dem Kolben 7 sind weiters zwei Kanäle 9a, 9b ausgebildet. Die Kanäle 9a, 9b weisen jeweils einen parallel zur Längsachse 8 des Kolbens 7 verlaufenden Parallelabschnitt 12a, 12b auf (Fig. 11, Fig. 12). Weiters weisen die Kanäle 9a, 9b jeweils zwei normal zur Längsachse 8 des Kolbens 7 verlaufende Radialabschnitte 13a, 13b, 14a, 14b auf. Die Parallelabschnitte 12a, 12b der Kanäle 9a, 9b sind jeweils, wie in Fig. 11 dargestellt, über die unterschiedlichen Stirnseiten des Kolbens 7 in diesen eingebracht und erstrecken sich jeweils von einer Stirnseite über den Bereich der Vorlaufebene 20 und den Bereich der Rücklaufebene 21. So erstreckt sich, wie in Fig. 11 und 12 dargestellt, der erste Kanal 9a von dem in der Nähe der Rücklaufebene 21 angeordneten Ende des Kolbens 7 über die Rücklaufebene 21 in den Bereich der Vorlaufebene 20 und der zweite Kanal 9b von dem der Vorlaufebene 20 zugewandten Ende des Kolbens 7 über die Vorlaufebene 20 in den Bereich der Rücklaufebene 21. Mit der Erstreckung in den Bereich der Vorlaufebene 20 und in den Bereich der Rücklaufebene 21 wird in diesem Zusammenhang verstanden, dass die Kanäle 9a, 9b bzw. die Parallelabschnitte 12a, 12b nicht bis ganz an die Vorlaufebene 20 bzw. Rücklaufebene 21 reichen, sondern in einem geringen Abstand zu diesen angeordnet sind. Alternativ kann natürlich vorgesehen sein, dass diese sich bis zur Vorlaufebene 20 bzw. Rücklaufebene 21 erstrecken oder über diese hinaus. Jeweils der erste Radialabschnitt 13a, 14a der Kanäle 9a, 9b ist im Bereich der Vorlaufebene 20 und der zweite jeweilige Radialabschnitt 13b, 14b der Kanäle 9a, 9b ist jeweils im Bereich der Rücklaufebene 21 angeordnet. Der erste Radialabschnitt 13a des ersten Kanals 9a erstreckt sich von dem Parallelabschnitt 12a des ersten Kanals 9a und mündet in die erste Freistellung 11a (Fig. 2). Der zweite Radialabschnitt 13b des ersten Kanals 9a erstreckt sich von dem im Bereich der Rücklaufebene 21 gelegenen Ende des Parallelabschnitts 12a des ersten Kanals 9a und mündet in den von der zweiten Freistellung 11b nicht freigestellten Bereich des Kolbens 7 in dessen Umfangsfläche (Fig. 3, Fig. 11). Mit dem nicht freigestellten Bereich des Kolbens 7 wird der Bereich des Kolbens 7 in Umfangrichtung verstanden, der sich radial bis zum äußeren Umfang des Kolbens 7 erstreckt, also in dem der Werkstoff des Kolbens 7 durch die Freistellung 11b bzw. 11a nicht entfernt wurde, sich also bis an den äußersten Umfang des Kolbens 7 hin erstreckt. Der erste Radialabschnitt 14a des zweiten Kanals 9b erstreckt sich im Bereich der Vorlaufebene 20 von dem Parallelabschnitt 12b des zweiten Kanals 9b bis in den von der ersten Freistellung 11a nicht freigestellten Bereich des Kolbens 7 und mündet in die Umfangsfläche des Kolbens 7. Der zweite Radialabschnitt 14b ist im Bereich der Rücklaufebene 21 angeordnet und erstreckt sich von dem zweiten Parallelabschnitt 12b des zweiten Kanals 9b bis zur zweiten Freistellung 11b und mündet in diese (Fig. 11, Fig. 12, Fig. 7).

Bei der ersten Ausführungsform der Anschlussarmatur 10 der Fig. 1 bis 18 ist der Kolben 7 in drei Stellungen verstellbar. Der Kolben 7 ist dabei aus einer Paralleldurchströmungsstellung (Fig. 1 bis Fig. 6) in eine Kreuzdurchströmungsstellung (Fig. 7 bis Fig. 12) oder eine Absperrstellung (Fig. 13 bis Fig. 18) in seiner Längsachse 8 oder zwischen diesen Stellungen verstellbar. In der Paralleldurchströmungsstellung (Fig. 1 bis Fig. 6) kann Heizmedium oder ein anderes Fluid über den Vorlaufannahmestutzen 2 in die Freistellung 11a eintreten und über den Vorlaufabgabestutzen 3 aus der Anschlussarmatur 10 beispielsweise in einen Heizkörper eintreten. Über den ersten Kanal 9a trifft das Heizmedium im Bereich der Rücklaufebene 21 gegen den Innenumfang der Zentralausnehmung 6 und kann somit nicht weiterströmen bzw. dessen Strömungsfluss ist unterbrochen. Somit strömt von dem Vorlaufaufnahmestutzen 2 lediglich Heizungsfluid zum Vorlaufabgabestutzen 3. Über den Rücklaufannahmestutzen 5 fließt dann das Heizungsmedium beispielsweise aus dem Heizkörper in die Anschlussarmatur 10 ein und strömt dann über die zweite Freistellung 11b in den Rücklaufabgabestutzen 4 und wieder in die Heizungsrücklaufleitung zurück. Aus der Freistellung 11b kann ebenfalls Heizmedium bzw. der Rücklauf in den zweiten Kanal 9b eintreten, trifft aber auf der Vorlaufebene 20 gegen den Umfang der Zentralausnehmung 6 und kann somit dort nicht weiterströmen. In der Paralleldurchströmungsstellung kann somit lediglich Heizfluid oder ein anderes Fluid die Anschlussarmatur 10 parallel, also vom Vorlaufannahmestutzen 2 zum Vorlaufabgabestutzen 3 und vom Rücklaufannahmestutzen 5 zum Rücklaufabgabestutzen 4 durchströmen. Die Paralleldurchströmungsstellung stellt den normalen Betriebszustand dar, in dem Heizfluid über die Anschlussarmatur 10 in einen Heizkörper oder einen Kühlkörper fließt und dann aus diesem wieder über die Anschlussarmatur 10 in eine Rücklaufleitung zurückströmt.

In den Fig. 7 bis 12 ist die Kreuzdurchströmungsstellung der ersten Ausführungsform der Anschlussarmatur 10 dargestellt. Zwischen der Kreuzdurchströmungsstellung und der Paralleldurchströmungsstellung ist der Kolben 7 in etwa um 45° im Uhrzeigersinn in seiner Längsachse 8 aus der Paralleldurchströmungsstellung in die Kreuzdurchströmungsstellung verdreht, wodurch der Durchfluss von Heizungsmedium oder anderer Medien von dem Vorlaufannahmestutzen 2 in den Vorlaufabgabestutzen 3 blockiert ist (Fig. 8). Das Heizmedium fließt nun aus dem Vorlaufannahmestutzen 2 in die erste Freistellung 11a und über diese in den ersten Kanal 9a ein und tritt im Bereich der Rücklaufebene 21 aus dem zweiten Radialabschnitt 13b des ersten Kanals 9a in den Rücklaufannahmestutzen 5 ein. Über den Rücklaufannahmestutzen 5 kann das Fluid nun in den Heizkörper oder einen Kühlkörper eintreten und aus dem Heiz- bzw. Kühlkörper in den Vorlaufabgabestutzen 3 einströmen (Fig. 11). Aus dem Vorlaufabgabestutzen 3 strömt das Medium nun über den zweiten Kanal 9b in den Rücklaufabgabestutzen 5. Ein direkter Fluidaustausch zwischen dem Vorlaufannahmestutzen 2 und dem Vorlaufabgabestutzen 3 bzw. ein Fluidaustausch zwischen Rücklaufannahmestutzen 5 und Rücklaufabgabestutzen 4 durch die Anschlussarmatur 10 ist durch die Stellung der Freistellungen 11a und 11b unterbunden. Somit kann bei vertauschter Vorlauf- und Rücklaufleitung des Heizungssystems ein richtiger Durchfluss des Heizkörpers ohne Umbau gewährleistet werden.

In den Fig. 13 bis 18 ist die Absperrstellung der ersten Ausführungsform der Anschlussarmatur 10 dargestellt. Der Kolben 7 ist im Vergleich zur Kreuzdurchströmungsstellung um weitere 45° in seiner Längsachse 8 im Uhrzeigersinn bzw. um 90° im Vergleich zur Paralleldurchströmungsstellung verdreht. Der zweite Radialabschnitt 13b des ersten Kanals 9a und der erste Radialabschnitt 14a des zweiten Kanals 9b weisen jeweils zum Innenumfang der Zentralausnehmung 6 wodurch kein Heizungsfluid durch diese in einen der Stutzen 2, 3, 4, 5 strömen kann. Auch die Freistellungen 11a, 11b erlauben keinen Durchfluss zu den einzelnen Stutzen 2, 3, 4, 5 sodass der Durchfluss von Fluid durch die Anschlussarmatur 10 gänzlich unterbunden ist. So kann beispielsweise ein Heizkörper in der Absperrstellung montiert, ausgetauscht oder gewartet werden, ohne dass die Heizungsanlage stillgelegt oder entlüftet werden muss.

In den Fig. 19 bis 36 ist eine zweite Ausführungsform einer nicht erfindungsgemäßen Anschlussarmatur 10 in verschiedenen Ansichten und Funktionszuständen dargestellt. In Fig. 19 ist eine isometrische Ansicht der zweiten Ausführungsform der Anschlussarmatur 10 dargestellt. Die Anschlussarmatur 10 umfasst ein Gehäuse 1 sowie vier Anschlussstutzen, den Vorlaufannahmestutzen 2, den Vorlaufabgabestutzen 3, den Rücklaufabgabestutzen 4 und den Rücklaufannahmestutzen 5. Der Vorlaufabgabestutzen 3, der Rücklaufannahmestutzen 4, der Vorlaufannahmestutzen 2 und der Rücklaufabgabestutzen 5 sind parallel zueinander angeordnet, wobei der Vorlaufabgabestutzen 3 und der Vorlaufannahmestutzen 2 bzw. deren Achsen in einer Vorlaufebene 20 liegen und der Rücklaufabgabestutzen 4 und der Rücklaufannahmestutzen 5 in einer Rücklaufebene 21 liegen (Fig. 20). Die Vorlaufebene 20 und die Rücklaufebene 21 sind entlang der Längsachse des Gehäuses 1 der Anschlussarmatur 10 in einem Abstand zueinander parallel angeordnet. Fig. 20 und 21 zeigen die zweite Ausführungsform der Anschlussarmatur 10 in einer Schnittansicht, wobei der Schnitt entlang der Längsachse des Gehäuses 1 dargestellt ist. Das Gehäuse 1 umfasst eine Zentralausnehmung 6, die sich von einer Stirnseite des Gehäuses 1 bis zur zweiten Stirnseite des Gehäuses 1 entlang der Längsachse des Gehäuses 1 erstreckt und im Bereich der Vorlaufebene 20 durch das Gehäuse 1 abgeschlossen ist. In die Zentralausnehmung 6 ist der Kolben 7 eingebracht, der im Wesentlichen gegengleich zur Zentralausnehmung 6 ausgebildet ist, also dessen Außenumfang in etwa dem Innenumfang der Zentralausnehmung 6 entspricht. Der Kolben 7 ist in seiner Längsachse 8 relativ zum Gehäuse 1 verdrehbar ausgebildet und kann zwischen einer Kreuzdurchströmungsstellung (Fig. 20 bis 27) einer Paralleldurchströmungsstellung (Fig. 28 bis Fig. 30), einer Absperrstellung (Fig. 31 bis Fig. 33) und einer Bypassstellung (Fig. 34 bis Fig. 35) verdreht werden.

Der Kolben 7 umfasst bei der zweiten Ausführungsform drei Freistellungen 11a, 11b, 11c, die sich jeweils über einen Umfangsabschnitt des Kolbens 7 erstrecken. Die erste Freistellung 11a erstreckt sich über einen Umfangsabschnitt des Kolbens 7 im Bereich der Vorlaufebene 20 (Fig. 20 bis 27), wobei die erste Freistellung 11a zur Vorlaufebene 20 leicht in Richtung des im Bereich der Vorlaufebene 20 angeordneten Endes des Kolbens 7 verschoben angeordnet ist. Die zweite Freistellung 11b ist im Bereich der Rücklaufebene 21 in einem geringen Abstand zu dieser in Richtung des Endes des Kolbens 7, das sich im Bereich der Rücklaufebene 21 befindet, versetzt. Die erste Freistellung 11a und die zweite Freistellung 11b erstrecken sich über den gleichen Umfangsabschnitt des Kolbens und sind bei dieser Ausführungsform über einen Umfangsbereich von 180° ausgebildet (Fig. 29, Fig. 30). Zwischen der ersten Freistellung 11a und der zweiten Freistellung 11b ist eine mittlere Freistellung 11c angeordnet, die jeweils zu der ersten Freistellung 11a und der zweiten Freistellung 11b durch nicht freigestelltes Material des Kolbens 7 fluiddicht getrennt ist. Die mittlere Freistellung 11c erstreckt sich im Wesentlichen über den Umfang des Kolbens 7 in Bezug auf dessen Längsachse 8 diagonal von der Vorlaufebene 20 zur Rücklaufebene 21 (Fig. 20, 21). Die mittlere Freistellung 11c ist dabei derart ausgebildet, dass ein Ende der mittleren Freistellung 11c im Bereich der Vorlaufebene 20 angeordnet ist und sich mit dem anderen Ende zur Rücklaufebene 21 erstreckt, wobei das Ende der mittleren Freistellung 11c im Bereich der Rücklaufebene 21 angeordnet ist und über den Umfang des Kolbens 7 um 180° zum Ende der mittleren Freistellung 11c das an der Vorlaufebene 20 liegt versetzt ist. Mit der diagonalen Anordnung der mittleren Freistellung 11c wird verstanden, dass die mittlere Freistellung 11c derart ausgebildet ist, dass ein Strömungsdurchfluss eines Heizungsmediums in der mittleren Freistellung 11c von der Vorlaufebene 20 zur Rücklaufebene 21 ermöglicht wird, wobei der Eintritt des Heizungsmediums in die mittlere Freistellung 11c und der Austritt des Heizungsmediums bzw. Fluids aus der mittleren Freistellung 11c im Bereich der Vorlaufebene 20 und Rücklaufebene 21 um 180° in Bezug zur Längsachse des Kolbens 7 versetzt ist.

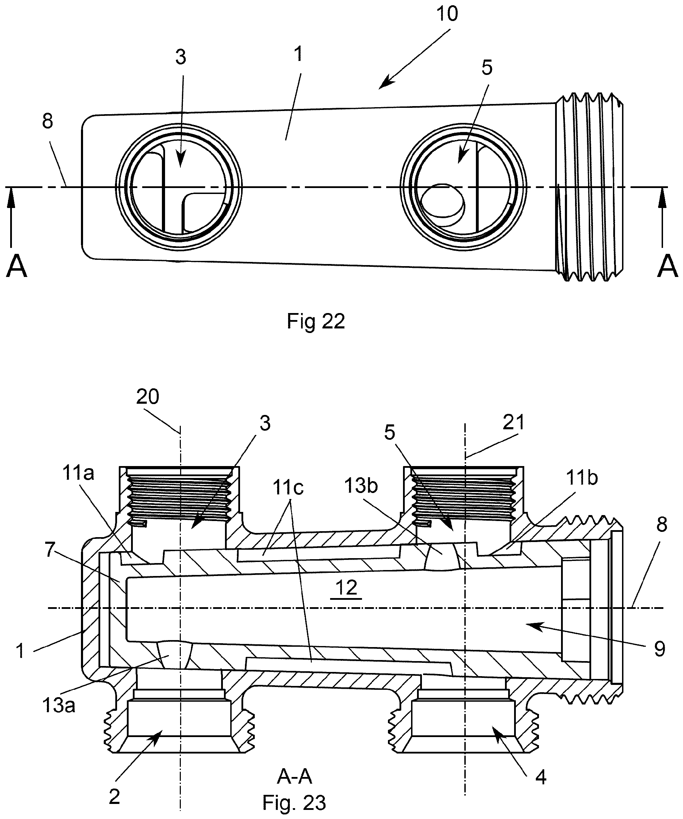

Der Kolben 7 der zweiten Ausführungsform der Anschlussarmatur 10 weist weiters einen Kanal 9 auf, der sich innerhalb des Kolbens 7 erstreckt. Der Kanal 9 ist im Wesentlichen parallel zur Längsachse 8 des Kolbens 7 angeordnet und liegt in dessen Längsachse 8. Der Kanal 9 weist einen Parallelabschnitt 12 auf, der in der Längsachse 8 des Kolbens 7 verläuft und den Kolben vom Ende, das im Bereich der Rücklaufebene 21 angeordnet ist, bis fast durch den gesamten Kolben 7 bis hin zur Vorlaufebene 20 durchzieht. Der Kanal 9 weist weiters zwei Radialabschnitte 13a und 13b auf, die sich entlang des Radius des Kolbens 7 erstrecken. Der erste Radialabschnitt 13a ist im Bereich der Vorlaufebene 20 angeordnet und erstreckt sich vom Parallelabschnitt 12 des Kanals 9 nach außen in den nicht freigestellten Bereich des Kolbens 7 und mündet in die Umfangsfläche des Kolbens 7. Der zweite Radialabschnitt 13b ist im Bereich der Rücklaufebene 21 angeordnet und erstreckt sich ebenfalls vom Parallelabschnitt 12 radial nach außen in den nicht freigestellten Bereich des Kolbens 7 und mündet in dessen Umfangsfläche. Die Mündung des ersten Radialabschnitts 13a und die Mündung des zweiten Radialabschnitts 13b am Umfang des Kolbens 7 sind zueinander in Bezug auf die Längsachse 8 des Kolbens 7 um 180° versetzt zueinander angeordnet. Im Bereich der Vorlaufebene 20 ist der Radialabschnitt 13a des Kanals 9 um 180° zur mittleren Freistellung 11c und der zweite Radialabschnitt 13b im Bereich der Rücklaufebene 21 ebenfalls um 180° zur mittleren Freistellung 11c in Bezug auf die Längsachse 8 des Kolbens 7 versetzt angeordnet (Fig. 20, 23).

Im Folgenden wird die Funktion der Anschlussarmatur 10 anhand der Fig. 20 bis 36 beschrieben. Der Kolben 7 kann in seiner Längsachse 8 von einer Paralleldurchströmungsrichtung (Fig. 28 bis 30) in eine Kreuzdurchströmungsrichtung (Fig. 20 bis 27) oder in eine Absperrstellung (Fig. 31 bis 33) oder eine Bypassstellung (Fig. 34 bis 36) verdreht werden. In der Paralleldurchströmungsstellung (28 bis 30) ist der Kolben 7 derart zum Gehäuse 1 bzw. zu der Vorlaufebene 20 und der Rücklaufebene 21 ausgerichtet, dass jeweils das Ende der ersten Freistellung 11a und der zweiten Freistellung 11b einen Durchfluss von Heizungsmedium in Paralleldurchströmungsrichtung erlauben. Heizungsmedium kann über den Vorlaufannahmestutzen 2 in das Gehäuse 1 eintreten, über die erste Freistellung 11a in den Vorlaufabgabestutzen 3 strömen und aus diesem in beispielsweise einen angeschlossenen Heizkörper eintreten (Fig. 29). Bei Austritt des Heizungsmediums aus dem Heizkörper strömt dieses dann in den Rücklaufannahmestutzen 5 ein und über die zweite Freistellung 11b in der Rücklaufebene 21 zum Rücklaufabgabestutzen 4 und aus diesem wieder in die Rücklaufleitung des Heizungssystems ein (Fig. 30). Die Mündungen der Radialabschnitte 13a, 13b des Kanals 9 münden in der Paralleldurchströmungsrichtung der zweiten Ausführungsform in den Innenumfang der Zentralausnehmung 6 und der Durchfluss, Strichpunktiert mit Pfeilen dargestellt, zu einem der Stutzen durch den Kanal 9 ist unterbrochen. Somit kann Heizungsmedium lediglich vom Vorlaufannahmestutzen 2 zum Vorlaufabgabestutzen 3 fließen und aus dem Rücklaufannahmestutzen 5 zum Rücklaufabgabestutzen 4. Eine Strömung des Heizungsmediums vom Vorlaufannahmestutzen 2 zum Rücklaufannahmestutzen 5 oder Rücklaufabgabestutzen 4 innerhalb der Anschlussarmatur 10 wird in der Paralleldurchströmungsstellung verhindert.

In den Fig. 20 bis 27 ist der Kolben 7 bzw. die Anschlussarmatur 10 in Kreuzdurchströmungsstellung dargestellt. Der Kolben 7 ist dabei derart zum Gehäuse 1 der Anschlussarmatur 10 angeordnet, dass der erste Radialabschnitt 13a des Kanals 9 zum Vorlaufannahmestutzen ausgerichtet ist und in diesen mündet. Der zweite Radialabschnitt 13b des Kanals 9 ist in der Rücklaufebene 21 in Richtung des Rücklaufannahmestutzens 5 ausgerichtet. So kann Heizungsmedium beim Eintritt in den Vorlaufannahmestutzen 2 über den Kanal 9 in den Rücklaufannahmestutzen 5 strömen und über diesen beispielsweise in einen Heizkörper oder Kühlkörper eintreten. Die mittlere Freistellung 11c verbindet den Vorlaufabgabestutzen 3 mit dem Rücklaufabgabestutzen 4, sodass ein Medium, das beispielsweise aus einem Heizkörper austritt, über den Vorlaufabgabestutzen 3 und die mittlere Freistellung 11c in den Rücklaufabgabestutzen 4 und über diesen wieder in eine Rücklaufleitung einer Heizungsanlage strömen kann. Die erste Freistellung 11a und die zweite Freistellung 11b sind dabei derart ausgerichtet, dass kein Medium aus einem der Stutzen 2, 3, 4, 5 zu einem anderen strömen kann. In der Kreuzdurchströmungsstellung kann beispielsweise ein verkehrt angeschlossener Heizkörper oder eine fehlerhaft montierte Heizungsleitung ohne großen Aufwand über die erfindungsgemäße Anschlussarmatur 10 angeschlossen werden und so auch bei Montagefehlern betrieben werden.

In den Fig. 31 bis 33 ist die Absperrstellung des Kolbens 7 dargestellt. In der Absperrstellung sind die Radialabschnitte 13a, 13b des Kanals 9 jeweils zur Wandung der Zentralausnehmung 6 ausgerichtet, sodass über den Kanal 9 kein Heizungsmedium strömen kann. Über die drei Freistellungen 11a, 11b, 11c kann ebenfalls kein Heizungsmedium zwischen dem Vorlaufannahmestutzen 2, dem Vorlaufabgabestutzen 3, dem Rücklaufannahmestutzen 5 und dem Rücklaufabgabestutzen 4 fließen, sodass in der Absperrstellung kein Heizungsmedium durch das Anschlussventil 10 strömen kann. In dieser Stellung können beispielsweise die Montage oder ein Austausch von Heizungs- oder Kühlkörpern durchgeführt werden, ohne die Heizungsleitung entlüften zu müssen.

In der Fig. 34 bis 36 ist eine Bypassstellung des Kolbens 7 bzw. der Anschlussarmatur 10 dargestellt. In der Bypassstellung ist die mittlere Freistellung 11c derart angeordnet, dass Heizungsfluid aus dem Vorlaufannahmestutzen 2 in den Rücklaufabgabestutzen 4 fließen kann. Der Durchfluss durch den Kanal 9 und über die erste Freistellung 11a und die zweite Freistellung 11b ist unterbunden. Somit kann lediglich Heizungsmedium vom Vorlaufannahmestutzen 2 über die mittlere Freistellung 11c zum Rücklaufabgabestutzen 4 fließen, was beispielsweise in Einrohrheizungsanlagen dazu führt, dass ein Heizkörper montiert werden kann, ohne den Fluss des Heizungsmediums innerhalb der Heizungsanlage unterbrechen zu müssen.

In Fig. 37 ist eine alternative Ausführungsform der Anschlussarmatur 10 in perspektivischer Ansicht dargestellt. Die Anschlussarmatur 10 weist zwei Vorlaufannahmestutzen 2a, 2b und zwei Rücklaufabgabestutzen 4a, 4b auf. Der erste Vorlaufannahmestutzen 2a und der zweite Vorlaufannahmestutzen 2b sind bei dieser Ausführungsform in der Vorlaufebene 20 in der Achse der Anschlussarmatur 10 um 90 Grad am Umfang des Gehäuses 1 versetzt zueinander angeordnet. Der erste Rücklaufabgabestutzen 4a und der zweite Rücklaufabgabestutzen 4b sind ebenfalls am Umfang des Gehäuses 1 in der Achse der Anschlussarmatur 10 um 90 ° bzw. im rechten Winkel zueinander versetzt angeordnet. Der erste Vorlaufannahmestutzen 2a und der erste Rücklaufabgabestutzen 4a sind dabei parallel zueinander angeordnet, wobei der Ausgang des Vorlaufannahmestutzens 2a und des Rücklaufabgabestutzens 4a auf derselben Seite des Umfangs des Gehäuses 1 angeordnet sind. Der zweite Vorlaufannahmestutzen 2b und der zweite Rücklaufabgabestutzen 4b sind ebenfalls parallel zueinander angeordnet und deren Austrittsöffnung zeigt ebenfalls in dieselbe Umfangsrichtung des Gehäuses 1. Durch die Ausbildung der Anschlussarmatur 10 mit jeweils zwei Vorlaufannahmestutzen 2a, 2b und zwei Rücklaufabgabestutzen 4a, 4b ist es möglich, unterschiedliche Heizkörper mit derselben Anschlussarmatur 10 an Heizungsleitungen zu befestigen. So wird je nach benötigter Anschlussart, also Eckanschluss oder Parallelanschluss, einer der Vorlaufannahmestutzen 2a, 2b und einer der Rücklaufabgabestutzen 4a, 4b verschlossen und an den anderen jeweils das Vorlaufheizungsrohr bzw. Rücklaufheizungsrohr angeschlossen. Die Ausführungsform mit zwei Rücklaufabgabestutzen und zwei Vorlaufannahmestutzen kann bei allen Ausführungen der erfindungsgemäßen Anschlussarmatur 10 optional vorgesehen sein.

In den Fig. 38 bis 40 ist eine Ausführungsform der erfindungsgemäßen Anschlussarmatur 10 in drei unterschiedlichen Funktionszuständen dargestellt. Die Anschlussarmatur 10 weist einen Vorlaufannahmestutzen 2 und einen Vorlaufabgabestutzen 3, die in einer Vorlaufebene 20 liegen und normal zur Längsachse 8 des Kolbens 7 angeordnet sind, auf. Weiter umfasst die Anschlussarmatur 10 einen Rücklaufabgabestutzen 4 und einen Rücklaufannahmestutzen 5, die in einer Rücklaufebene 21 liegen und normal zur Längsachse 8 des Kolbens 7 angeordnet sind, auf. Die Vorlaufebene 20 und die Rücklaufebene 21 sind entlang der Längsachse 8 des Kolbens 7 zueinander beabstandet und liegen jeweils im Bereich eines Endes des länglich ausgebildeten Gehäuses 1 der Anschlussarmatur 10. Die Anschlussarmatur 10 umfasst einen Kolben 7, der einen äußeren Kolbenteil 30 und einen inneren Kolbenteil 31 umfasst. Das äußere Kolbenteil 30 ist hohlzylinderförmig ausgebildet und liegt abschnittsweise mit seinem Außenumfang oder optional mittels O-Ringdichtungen an der Wandung der Zentralausnehmung 6 an. Das äußere Kolbenteil 30 ist über das auf einer Seite offene Gehäuse 1 der Anschlussarmatur 10 in die Zentralausnehmung 6 vollständig eingebracht und mit einem der Vorlaufebene 20 nahen Ende über ein Gewinde 60 in ein gegengleich ausgebildetes Gewinde der Zentralausnehmung 6 eingeschraubt. Durch Verdrehung des äußeren Kolbenteils 30 wird dieses entlang der Achse 8 des Kolbens 7 verstellt. Das innere Kolbenteil 31 ist ebenfalls teilweise hohlzylindrisch ausgebildet und im Inneren des äußeren Kolbenteils 30 angeordnet und liegt abschnittsweise an dem Innenumfang des äußeren Kolbenteils 30 an. Das äußere Kolbenteil 30 ist entlang der Längsachse 8 des Kolbens 7 relativ zum äußeren Kolbenteil 30 bzw. zum Gehäuse 1 der Anschlussarmatur 10 verstellbar bzw. verschiebbar. Im Inneren des ersten Kolbenteils 30 ist der Kanal 9, der sich entlang der Längsachse 8 erstreckt, ausgebildet. Der Vorlaufannahmestutzen 2, der Vorlaufabgabestutzen 3, der Rücklaufabgabestutzen 4 und der Rücklaufannahmestutzen 5 sind jeweils mit der Zentralausnehmung 6 über eine Durchtrittsöffnung 33a, 33b, 33c, 33d fluidübertragend verbunden, wobei jeweils Wasser oder andere Heizungsmedien aus den einzelnen Stutzen in die Zentralausnehmung 6 bzw. aus der Zentralausnehmungen 6 in die jeweiligen Stutzen aus- bzw. eintreten kann. Die Durchtrittsöffnungen 33a, 33b des Vorlaufannahmestutzens 2 und des Vorlaufabgabestutzens 3 sind in der Vorlaufebene 20 jeweils in Richtung der Längsachse 8 an gegenüberliegenden Seiten der Vorlaufebene 20, an gegenüberliegenden Seiten des Umfangs des Kolbens 1 und in Richtung der Längsachse 8 zueinander beabstandet angeordnet. Die Durchtrittsöffnungen 33c, 33d des Rücklaufabgabestutzens 4 und des Rücklaufannahmestutzens 5 sind in der Rücklaufebene 21 jeweils in Richtung der Längsachse 8 an gegenüberliegenden Seiten der Rücklaufebene 21 angeordnet, wobei die Durchtrittsöffnungen 33c, 33d in Umfangsrichtung des Gehäuses 1 der Anschlussarmatur 10 an gegenüberliegenden Punkten angeordnet sind und in Richtung der Längsachse 8 zueinander beabstandet sind. Der äußere Kolbenteil 31 weist vier Durchtrittsfenster 34a, 34b, 34c, 34d auf, die jeweils am Umfang des äußeren Kolbenteils 31 in Richtung der Längsachse 8 hintereinander und zueinander beabstandet angeordnet sind. Der Abstand zwischen dem ersten Durchtrittsfenster 34a und dem zweiten Durchtrittsfenster 34b entspricht in Richtung der Längsachse 8 ungefähr dem Abstand zwischen der Durchtrittsöffnung 33a und der Durchtrittsöffnung 33b des Vorlaufannahmestutzens 2 und des Vorlaufabgabestutzens 3. Der Abstand zwischen dem dritten Durchtrittsfenster 34c und dem vierten Durchtrittsfenster 34d in Richtung der Längsachse 8 entspricht ungefähr dem Abstand zwischen den Durchtrittsöffnungen 33c, 33d des Rücklaufabgabestutzens 4 und des Rücklaufannahmestutzens 5. Der Abstand zwischen dem zweiten Durchtrittsfenster 34b und den dritten Durchtrittsfenster 34c in Richtung der Längsachse 8 entspricht weiters ungefähr dem Abstand zwischen den Durchtrittsöffnungen 33b, 33c des Rücklaufannahmestutzens 5 und des Vorlaufannahmestutzens 2. Im Bereich der vier Durchtrittsfenster 34a, 34b, 34c, 34d ist jeweils eine Freistellung 11a, 11b, 11c, 11d vorgesehen, die jeweils über den äußeren Umfang des äußeren Kolbenteils 31 verläuft und jeweils von der benachbarten Freistellung 11a, 11b, 11c, 11d durch eine Anzahl von Stegen 36a, ..., 36d, die vom Außenumfang des äußeren Kolbenteils 30 abstehen, getrennt ist. Die Stege 36a, ..., 36d umfassen jeweils seine Nut in die eine Dichtung wie z.B. eine O-Ringdichtung eingebracht werden kann und ragen vom Umfang des äußeren Kolbenteils 30 in Richtung der Wandung der Zentralausnehmung 6, liegen an dieser an und fungieren als Führung bzw. Abstützung des äußeren Kolbenteils 30. Alternativ können die Stege 36a, ..., 36d auch von der Wandung der Zentralausnehmung 6 beabstandet sein und die in den Nuten der Stege 36a, ..., 36d angeordnete Dichtung jeweils auch als Führung fungieren.

Der innere Kolbenteil 31 weist eine Strömungsöffnung 35 auf, die den Kanal 9 mit dem äußeren Umfang des inneren Kolbenteils 31 verbindet. Der innere Kolbenteil 31 weist weiter eine über den Außenumfang des inneren Kolbenteils 31 entlang der Längsachse 8 verlaufende Umfangsfreistellung 37 auf, wobei die Umfangsfreistellung 37 jeweils an ihrem Ende durch zwei Stege, jeweils umfassend Nuten für O-Ringdichtungen, fluiddicht begrenzt ist und die Stege als Führung in dem äußeren Kolbenteil 30 dienen. Der Abstand von dem Ende des inneren Kolbenteils 31, das in der Vorlaufebene 20 angeordnet ist, bis zur Strömungsöffnung 35 entspricht ungefähr dem Abstand der Vorlaufebene 20 zur Rücklaufebene 21. Weiters entspricht die Länge der Umfangsfreistellung 37 in Richtung der Längsachse 8 ungefähr dem Abstand zwischen dem zweiten Durchtrittsfenster 34b und dem dritten Durchtrittsfenster 34c in Richtung der Längsachse 8. Das innere Kolbenteil 31 ist über ein Gewinde mit dem äußeren Kolbenteil 30 verbunden und kann durch Verdrehen des inneren Kolbenteils 31 in der Achse 8 relativ zum äußeren Kolbenteil 30 und damit zum Gehäuse 1 der Anschlussarmatur 10 in der Längsachse 8 verstellt bzw. verschoben werden.

In Fig. 38 ist die erfindungsgemäße Ausführungsform der Anschlussarmatur 10 in Absperrstellung in einem Schnitt dargestellt. Das äußere Kolbenteil 30 ist vollständig in der Zentralausnehmung 5 der Anschlussarmatur 10 versenkt, wodurch kein Heizungsfluid aus dem Vorlaufannahmestutzen 2 über die Durchtrittsöffnung 33a des Vorlaufannahmestutzens 2 in die Freistellung 11a eintreten kann, aber von dieser durch die Stege 36a, 36b mit den dazwischen liegenden O-Ringdichtungen in der Freistellung 11a gehalten wird und so zu keinem weiteren Stutzen fließen kann. In der Absperrstellung kann somit kein Heizungsfluid aus dem Vorlaufannahmestutzen 2 über die Anschlussarmatur 10 in einen etwaig angeschlossenen Heizkörper fließen. Andererseits ist es möglich, dass etwaiges im Heizkörper befindliches Heizungsfluid aus dem Heizkörper in den Vorlaufabgabestutzen 3 eintreten, über die zweite Durchtrittsöffnung 33b in die zweite Freistellung 11b eintreten, über das zweite Durchtrittsfenster 34b in den Kanal strömen, aus diesem über die Strömungsöffnung 35 in die dritte Freistellung 11c eintreten und über die dritte Freistellung 11c und die dritte Durchtrittsöffnung 33c über den Rücklaufabgabestutzen 4 aus der Anschlussarmatur 10 austreten kann. Durch den Fluss des Heizungsmediums über den Vorlaufabgabestutzen 3 zum Rücklaufabgabestutzen 4 kann eine eventuell gewünschte Entlüftung des Heizkörpers in der Absperrstellung erreicht werden.

Aus der Absperrstellung (Fig. 38) wird der äußere Kolbenteil 30 durch Verdrehen in seiner Achse bzw. in der Längsachse 8 aus der Absperrstellung (Fig. 39) in die Paralleldurchströmungsstellung (Fig. 39) in Richtung der Rücklaufebene 21 verstellt. In der Paralleldurchströmungsstellung (Fig. 39) kann Heizungsmedium über den Vorlaufannahmestutzen 2 über die erste Durchtrittsöffnung 33a in die erste Freistellung 11a eintreten, über diese durch das erste Durchtrittsfenster 34a in den Kanal 9, das zweite Durchtrittsfenster 34b in die zweite Freistellung 11b und über diese bzw. die zweite Durchtrittsöffnung 33b und den Vorlaufabgabestutzen 3 in einen Heizkörper eintreten. Am Rücklaufannahmestutzen 5 kann sodann Heizungsmedium, das den Heizkörper verlässt, über die vierte Durchtrittsöffnung 33d in die vierte Freistellung 11d eintreten und über das vierte Durchtrittsfenster 34d in die Umfangsfreistellung 37 eintreten, wieder über das dritte Durchtrittsfenster 34c in die dritte Freistellung 11c eintreten und über die dritte Durchtrittsöffnung 33c in den Rücklaufabgabestutzen 4, wie durch die in Fig. 39 dargestellten, strichlierten Pfeile gezeigt, aus der Anschlussarmatur 10 wieder austreten.

Aus der in Fig. 39 dargestellten Paralleldurchströmungsstellung kann durch Verstellung des inneren Kolbenteils 31 relativ zum äußeren Kolbenteil 30 in Richtung der Vorlaufebene 20 die Anschlussarmatur 10 in eine Kreuzdurchströmungsstellung (Fig. 40) verstellt werden. In der Kreuzdurchströmungsstellung kann Heizungsmedium, dargestellt durch die strichlierten, mit Pfeilen versehenen Linien, aus einer Vorlaufleitung in den Vorlaufannahmestutzen 2 in die Anschlussarmatur 10 eintreten. Von dem Vorlaufannahmestutzen 2 tritt Heizungsmedium durch die Durchtrittsöffnung 33a in die erste Freistellung 11a, über diese durch das erste Durchtrittsfenster 34a in die Umfangsfreistellung 37 des inneren Kolbenteils 31 ein und über die Umfangsfreistellung 37, das vierte Durchtrittsfenster 34d, über die vierte Freistellung 11d und die vierte Durchtrittsöffnung 33d in den Rücklaufannahmestutzen 5 ein und gelangt über diesen in einen etwaig an der Anschlussarmatur 10 angeschlossenen Heizkörper. Weiters kann das aus dem Heizkörper austretende Heizungsfluid über den Vorlaufabgabestutzen 3 in die Anschlussarmatur 10 eintreten. Das Heizungsmedium fließt sodann von dem Vorlaufabgabestutzen 3 durch die zweite Durchtrittsöffnung 33b in die zweite Freistellung 11b, über das zweite Durchtrittsfenster 34b in den Kanal 9, strömt entlang der Längsachse 8 in Richtung der Rücklaufebene 21, dann über die Strömungsöffnung 35, das vierte Durchtrittsfenster 34d in die dritte Freistellung 11c, über diese durch die dritte Durchtrittsöffnung 33c in den Rücklaufabgabestutzen 4 und über diesen aus der Anschlussarmatur 10. Durch die Verstellung der Anschlussarmatur 10 in die Kreuzdurchströmungsstellung (Fig. 40) können etwaig falsch angeschlossene Heizkörper mit ein und derselben Anschlussarmatur durchströmt werden, indem Heizungsmedium, wie beschrieben, in den Rücklaufannahmestutzen 5 als Vorlauf und damit in den Heizkörper strömen kann und sodann aus dem Heizkörper, wie beschrieben, über den Vorlaufabgabestutzen 3 zum Rücklaufabgabestutzen 4 und aus diesem in eine Rücklaufleitung einströmen kann.

Wie in den Fig. 20 bis 23 dargestellt, kann der Kolben 7 und die Zentralfreistellung 6 optional kegelstumpfförmig ausgebildet sein, wobei der Kolben 7 eine konische Form von einem Ende bis zum anderen Ende aufweisen kann. Eine kegelstumpfförmige Ausbildung des Kolbens 7 bewirkt eine besondere Dichtwirkung, die verhindert, dass Leckagemengen von Heizungs- oder Kühlmedien durch die Anschlussarmatur 10 auftritt.

Erfindungsgemäß kann vorgesehen sein, dass die Freistellungen 11a, 11b, 11c sich über einen Umfangsbereich des Kolbens 7 mit einem Winkel von 180° bis 280° erstrecken, wobei sich die Freistellungen 11a, 11b, 11c insbesondere über 220 bis 260° des Umfangsbereichs des Kolbens 7 erstrecken. Besonders bevorzugt kann, wie zu den Fig. 20 bis 36 dargestellt, die erste Freistellung 11a, die zweite Freistellung 11b und die dritte Freistellung 11c sich über jeweils 180° des Umfangsbereichs des Kolbens 7 erstrecken. Die erste Freistellung 11a und die zweite Freistellung 11b der ersten Ausführungsform der Fig. 1 bis 18 erstrecken sich bevorzugt in einem Winkel von 253° über den Umfang des Kolbens 7, was zu einer besonders bevorzugten Anordnung führt (Fig. 10). Alternativ kann vorgesehen sein, dass die Freistellungen 11a, 11b, 11c durch Dichtelemente, wie z.B. Dichtringe, O-Ringe oder andere voneinander getrennt bzw. zueinander abgedichtet sind.

Optional kann die Anschlussarmatur auch als Eckanschlussarmatur ausgebildet sein, wobei der Vorlaufannahmestutzen 2 und der Rücklaufabgabestutzen 4 parallel zueinander angeordnet sind, der Vorlaufabgabestutzen 3 und der Rücklaufannahmestutzen 5 ebenfalls parallel zueinander angeordnet sind und der Vorlaufannahmestutzen mit dem Vorlaufabgabestutzen bzw. der Rücklaufabgabestutzen mit dem Rücklaufannahmestutzen jeweils in einem Winkel von 90° angeordnet sind. Die Ausbildung als Eckanschlussarmatur ermöglicht es beispielsweise, Heizkörper über die Anschlussarmatur 10 mit Leitungen, die waagrecht aus einer Wand stehen, zu verbinden.

Optional kann vorgesehen sein, dass der Vorlaufannahmestutzen 2 und/oder der Vorlaufabgabestutzen 3 und/oder der Rücklaufabgabestutzen 4 und/oder der Rücklaufannahmestutzen 5 zur einfachen Verbindung mit Heizkörpern oder Rohrleitungen als Steckanschluss oder Klemmringverschraubung ausgebildet sind. Wie in der Fig. 11 dargestellt, kann der Kolben 7 oder das Gehäuse 1 optional Markierungen aufweisen, die die einzelnen Stellungen des Kolbens 7 anzeigen bzw. markieren. Eine einfache Herstellung des Kolbens 7 wird erreicht, wenn dieser beispielsweise aus einem Spritzgusswerkstoff oder Kunststoff ausgebildet ist, wobei optional das Gehäuse 1 und/oder der Kolben 7 aus Messing oder einem Kunststoff, insbesondere Thermofor oder Hostaform, bestehen können.

Wie in den Fig. 19 bis 36 angedeutet, kann der Kolben 7 optional durch einen Motorantrieb, beispielsweise einen Schrittmotor oder Steppermotor zwischen den verschiedenen Stellungen verstellt werden. Ebenfalls kann eine manuelle Verstellung mittels eines Werkzeuges oder ohne Werkzeug zwischen den einzelnen Stellungen vorgesehen sein.

## Patentansprüche

1. Anschlussarmatur (10) zur Steuerung der Flussrichtung eines Heizungsmediums in einem Heizkörper, wobei die Anschlussarmatur (10) ein Gehäuse (1) umfasst und insbesondere als Hahn-Block ausgebildet ist,
wobei die Anschlussarmatur (10) zum Anschluss eines Heizkörpers an die Vorlauf- und Rücklaufleitung einer Heizungsanlage einen Vorlaufannahmestutzen (2) zum Anschluss an eine Vorlaufleitung und einen Rücklaufabgabestutzen (4) zum Anschluss an eine Rücklaufleitung aufweist,
- wobei die Anschlussarmatur (10) einen Vorlaufabgabestutzen (3) zum Anschluss an den Vorlaufanschluss eines Heizkörpers und einen Rücklaufannahmestutzen (5) zum Anschluss an die Rücklaufleitung eines Heizkörpers aufweist,
wobei das Gehäuse (1) eine, insbesondere normal zum Vorlaufannahmestutzen (2) und/oder Vorlaufabgabestutzen (3) und/oder Rücklaufabgabestutzen (4) und/oder Rücklaufannahmestutzen (5) angeordnete, Zentralausnehmung (6) aufweist, die den Vorlaufannahmestutzen (2), den Vorlaufabgabestutzen (3), den Rücklaufabgabestutzen (4) und den Rücklaufannahmestutzen (5) fluidübertragend miteinander verbindet,
wobei in der Zentralausnehmung (6) ein entlang seiner Längsachse (8) verschiebbarer Kolben (7) angeordnet ist, der an seinem Umfang an der Wandung der Zentralausnehmung (6) zumindest abschnittsweise anlegbar ist,
- wobei der Kolben (7) zumindest einen im Inneren des Kolbens (7) verlaufenden Kanal (9) aufweist,
- wobei der Kolben (7) eine Anzahl von Freistellungen (11) aufweist, die sich jeweils über einen Teil des Umfangs des Kolbens (4) erstrecken und zueinander beabstandet und durch den Werkstoff des Kolbens (7) oder Dichtelemente fluiddicht getrennt sind,
**dadurch gekennzeichnet, dass**
der Kolben (7) aus einer Paralleldurchströmungsstellung in eine Kreuzdurchströmungsstellung entlang seiner Längsachse (8) verschiebbar ist,
wobei der Kanal (9) und die Freistellungen (11) derart ausgebildet und zueinander angeordnet sind,
- dass in der Paralleldurchströmungsstellung des Kolbens (7) Heizungsmedium vom Vorlaufannahmestutzen (2) über den Kanal (9) oder eine der Freistellungen (11) zum Vorlaufabgabestutzen (3) und Heizungsmedium vom Rücklaufannahmestutzen (5) über den Kanal (9) oder eine der Freistellungen (11) zum Rücklaufabgabestutzen (4) fließen kann und der Durchfluss von Heizungsmedium vom Vorlaufannahmestutzen (2) zum Rücklaufabgabestutzen (4) und zum Rücklaufannahmestutzen (5) und umgekehrt unterbunden ist, und
- dass in der Kreuzdurchströmungsstellung des Kolbens (7) Heizungsmedium vom Vorlaufannahmestutzen (2) über den Kanal (9) oder eine der Freistellungen (11) zum Rücklaufannahmestutzen (5) und Heizungsmedium vom Vorlaufabgabestutzen (3) über den Kanal (9) oder eine der Freistellungen (11) zum Rücklaufabgabestutzen (4) fließen kann und der Durchfluss von Heizungsmedium vom Vorlaufannahmestutzen (2) zum Rücklaufabgabestutzen (4) und zum Vorlaufabgabestutzen (3) und umgekehrt unterbunden ist.

2. Anschlussarmatur (10) nach Anspruch 1, **dadurch gekennzeichnet, dass** der Kolben (7) aus einer Paralleldurchströmungsstellung in eine Kreuzdurchströmungsstellung und eine Absperrstellung entlang seiner Längsachse (8) verschiebbar ist,
wobei der Kanal (9) und die Freistellungen (11), derart ausgebildet und zueinander angeordnet sind,
dass in der Absperrstellung des Kolbens (7) der Durchfluss von Heizungsmedium durch die Anschlussarmatur unterbunden ist.

3. Anschlussarmatur (10) nach einem der vorangehenden Ansprüche, **dadurch gekennzeichnet, dass** der Kolben (7) aus einer Paralleldurchströmungsstellung in eine Kreuzdurchströmungsstellung und eine Absperrstellung oder eine Bypassstellung entlang seiner Längsachse (8) verschiebbar ist,
wobei der Kanal (9) und die Freistellungen (11), derart ausgebildet und zueinander angeordnet sind,
dass in der Bypassstellung des Kolbens (7) Heizungsmedium von dem Vorlaufannahmestutzen (2) zum Rücklaufabgabestutzen (4) oder umgekehrt fließen kann und der Durchfluss von Heizungsmedium zum Vorlaufabgabestutzen (3) und dem Rücklaufannahmestutzen (5) unterbunden ist.

4. Anschlussarmatur (10) nach einem der vorangehenden Ansprüche, **dadurch gekennzeichnet, dass** die Achsen des Vorlaufannahmestutzens (2) und des Vorlaufabgabestutzens (3) in einer Vorlaufebene (20) liegen, die normal zur Längsachse (8) des Kolbens (7) angeordnet ist und dass der Rücklaufabgabestutzen (4) und Rücklaufannahmestutzen (5) in einer Rücklaufebene (21) liegen, die normal zur Längsachse (8) des Kolbens (7) angeordnet ist, wobei die Vorlaufebene (20) und die Rücklaufebene (21) entlang der Längsachse (8) zueinander beabstandet sind,
dass der Kolben (7) zwei Freistellungen (11a, 11b) aufweist, wobei die erste Freistellung (11a) sich über einen Umfangsabschnitt des Kolbens (7) im Bereich der Vorlaufebene (20) erstreckt und die zweite Freistellung (11b) sich über einen Umfangsabschnitt des Kolbens (7) im Bereich der Rücklaufebene (21) erstreckt,
dass der Kolben (7) zwei Kanäle (9a, 9b) aufweist, wobei die Kanäle (9a, 9b) jeweils einen parallel zur Längsachse (8) des Kolbens (7) verlaufenden Parallelabschnitt (12a, 12b) und jeweils zwei normal zur Längsachse (8) des Kolbens (7) verlaufende Radialabschnitte (13a, 13b, 14a, 14b) aufweisen,
wobei die Parallelabschnitte (12a, 12b) sich jeweils in den Bereich der Vorlaufebene (20) und Rücklaufebene (21) erstrecken,
wobei jeweils der erste Radialabschnitt (13a, 14a) der Kanäle (9a, 9b) im Bereich der Vorlaufebene (20) und der zweite Radialabschnitt (13b, 14b) der Kanäle (9a, 9b) im Bereich der Rücklaufebene (21) angeordnet ist,
wobei der erste Radialabschnitt (13a) des ersten Kanals (9a) in die erste Freistellung (11a) mündet und der zweite Radialabschnitt (13b) des ersten Kanals (9a) in den von der zweiten Freistellung (11b) nicht freigestellten Bereich des Kolbens (7) in dessen Umfangsfläche mündet,
wobei der erste Radialabschnitt (14a) des zweiten Kanals (9b) in den von der ersten Freistellung (11a) nicht freigestellten Bereich des Kolbens (7) in dessen Umfangsfläche mündet und der zweite Radialabschnitt (14b) des zweiten Kanals (9b) in die zweite Freistellung (11b) mündet.

5. Anschlussarmatur (10) nach einem der Ansprüche 1 bis 3, **dadurch gekennzeichnet, dass** die Achsen des Vorlaufannahmestutzen (2) und des Vorlaufabgabestutzen (3) in einer Vorlaufebene (20) liegen, die normal zur Längsachse (8) des Kolbens (7) angeordnet ist und dass der Rücklaufabgabestutzen (4) und Rücklaufannahmestutzen (5) in einer Rücklaufebene (21) liegen, die normal zur Längsachse (8) des Kolbens (7) angeordnet ist, wobei die Vorlaufebene (20) und die Rücklaufebene (21) entlang der Längsachse (8) zueinander beabstandet sind,
dass der Kolben (7) einen Kanal (9) und drei Freistellungen (11a, 11b, 11c) aufweist,
wobei die erste Freistellung (11a) sich über einen Umfangsabschnitt des Kolbens (7) im Bereich der Vorlaufebene (20) erstreckt und die zweite Freistellung (11b) sich über einen Umfangsabschnitt des Kolbens (7) im Bereich der Rücklaufebene (21) erstreckt, wobei die erste Freistellung (11a) und die zweite Freistellung (11b) sich über den gleichen Umfangsabschnitt des Kolbens erstrecken,
wobei die mittlere Freistellung (11c) zwischen der ersten Freistellung (11a) und der zweiten Freistellung (11b) angeordnet ist und zu diesen durch nicht freigestelltes Material des Kolbens (7) oder Dichtelemente getrennt ist und einen im wesentlichen über den Umfang in Bezug zur Längsachse (8) des Kolbens (7) von der Vorlaufebene (20) zur Rücklaufebene (21) diagonal angeordneten Verlauf aufweist,
wobei der Kanal (9) einen parallel zur Längsachse (8), insbesondere in der Längsachse (8), des Kolbens (7) verlaufenden Parallelabschnitt (12) und zwei normal zur Längsachse (9) des Kolbens verlaufende Radialabschnitte (13a, 13b) aufweist,
wobei der erste Radialabschnitt (13a) im Bereich der Vorlaufebene (20) angeordnet ist und sich vom Parallelabschnitt (12) des Kanals (9) nach außen in den nicht freigestellten Bereich des Kolbens (7) erstreckt und in dessen Umfangsfläche mündet,
wobei der zweite Radialabschnitt (13b) im Bereich der Rücklaufebene (21) angeordnet ist und sich vom Parallelabschnitt (12) des Kanals (9) nach außen in den nicht freigestellten Bereich des Kolbens (7) erstreckt und in dessen Umfangsfläche mündet,
wobei die Mündung des ersten Radialabschnitts (13a) und die Mündung des zweiten Radialabschnitts (13b) am Umfang des Kolbens über 180° versetzt zueinander angeordnet und jeweils in der Vorlaufebene (20) und der Rücklaufebene (21) um 180° zur dritten Freistellung (11c) versetzt angeordnet sind.

6. Anschlussarmatur (10) nach einem der Ansprüche 1 bis 3, **dadurch gekennzeichnet, dass** die Achsen des Vorlaufannahmestutzens (2) und des Vorlaufabgabestutzens (3) in einer Vorlaufebene (20) liegen, die normal zur Längsachse (8) des Kolbens (7) angeordnet ist und dass der Rücklaufabgabestutzen (4) und Rücklaufannahmestutzen (5) in einer Rücklaufebene (21) liegen, die normal zur Längsachse (8) des Kolbens (7) angeordnet ist, wobei die Vorlaufebene (20) und die Rücklaufebene (21) entlang der Längsachse (8) zueinander beabstandet sind,
wobei der Kolben (7) einen äußeren Kolbenteil (30) und einen inneren Kolbenteil (31) umfasst, wobei der äußere Kolbenteil (30) hohlzylinderförmig ausgebildet ist und an seinem Außenumfang an der Wandung der Zentralausnehmung (6) zumindest abschnittsweise anlegbar ist und in der Zentralausnehmung (6) entlang der Längsachse (8) des Kolbens (7) verstellbar ist,
wobei der innere Kolbenteil (31) im äußeren Kolbenteil (30) angeordnet ist und mit seinem Außenumfang an dem Innenumfang des äußeren Kolbenteils (30) zumindest abschnittsweise anlegbar ist und zum äußeren Kolbenteil (30) entlang der Längsachse (8) des Kolbens (7) relativ verstellbar ist,
wobei der Kanal (9) im Inneren des inneren Kolbenteils (31), insbesondere in der Längsachse (8), verläuft,
wobei der Vorlaufannahmestutzen (2), der Vorlaufabgabestutzen (3), der Rücklaufabgabestutzen (4) und der Rücklaufannahmestutzen (5) mit der Zentralausnehmung (6) jeweils über eine Durchtrittsöffnung (33a, 33b, 33c, 33d) fluidübertragend verbunden sind, wobei die Durchtrittsöffnungen (33a, 33b) des Vorlaufannahmestutzens (2) und des Vorlaufabgabestutzens (3) in der Vorlaufebene (20) jeweils in Richtung der Längsachse (8) an gegenüberliegenden Seiten der Vorlaufebene (20) angeordnet sind und in Richtung der Längsachse (8) zueinander beabstandet sind, wobei die Durchtrittsöffnung (33c, 33d) des Rücklaufabgabestutzen (4) und des Rücklaufannahmestutzen (5) in der Rücklaufebene (21) jeweils in Richtung der Längsachse (8) an gegenüberliegenden Seiten der Rücklaufebene (21) angeordnet sind und in Richtung der Längsachse (8) zueinander beabstandet sind,
wobei der äußere Kolbenteil (30) vier Durchtrittsfenster (34a, 34b, 34c, 34d) aufweist, die jeweils am Umfang des äußeren Kolbenteils (30) in Richtung der Längsachse (8) hintereinander angeordnet und zueinander beanstandet sind, wobei der Abstand zwischen dem ersten Durchtrittsfenster (34a) und dem zweiten Durchtrittsfenster (34b) in Richtung der Längsachse (8) ungefähr dem Abstand zwischen den Durchtrittsöffnungen (33a, 33b) des Vorlaufannahmestutzens (2) und des Vorlaufabgabestutzens (3) entspricht, wobei der Abstand zwischen dem dritten Durchtrittsfenster (34c) und dem vierten Durchtrittsfenster (34d) in Richtung der Längsachse (8) ungefähr dem Abstand zwischen den Durchtrittsöffnungen (33c, 33d) des Rücklauflaufannahmestutzens (5) und des Rücklauflaufabgabestutzens (4) entspricht, und wobei der Abstand zwischen dem zweiten Durchtrittsfenster (34b) und dem dritten Durchtrittsfenster (34c) in Richtung der Längsachse (8) ungefähr dem Abstand zwischen den Durchtrittsöffnungen (33b, 33c) des Rücklauflaufannahmestutzens (5) und des Vorlaufannahmestutzes (2) entspricht,
wobei jeweils im Bereich der vier Durchtrittsfenster (34a, 34b, 34c, 34d) je eine Freistellung (11a, 11b, 11c, 11d) vorgesehen ist, die jeweils über den äußeren Umfang des äußeren Kolbenteils (30) verläuft und jeweils von der benachbarten Freistellung (11a, 11b, 11c, 11d) durch zumindest einen Steg (36a, 36b, 36c), insbesondere umfassend eine Nut zu Einbringung einer Dichtung, fluiddicht getrennt ist,
wobei der innere Kolbenteil (31) eine Strömungsöffnung (35), die den Kanal (9) mit dem äußeren Umfang des inneren Kolbenteils (31) verbindet, und eine über den Außenumfang des inneren Kolbenteils (31) entlang der Längsachse (8) verlaufende Umfangsfreistellung (37) aufweist, wobei der Abstand von dem Ende des inneren Kolbenteils (31), das in der Vorlaufebene (20) angeordnet ist, zur Strömungsöffnung (35) ungefähr dem Abstand der Vorlaufebene (20) zur Rücklaufebene (21) entspricht,
und wobei die Länge der Umfangsfreistellung (37) in Richtung der Längsachse (8) ungefähr dem Abstand zwischen dem zweiten Durchtrittsfenster (34b) und dem dritten Durchtrittsfenster (34c) in Richtung der Längsachse (8) entspricht.

7. Anschlussarmatur (10) nach einem der vorangehenden Ansprüche, **dadurch gekennzeichnet, dass** die Freistellungen (11a, 11b, 11c) sich über einen Umfangsbereich mit einem Winkel von 180° bis 280°, insbesondere 220° bis 260°, erstrecken.

8. Anschlussarmatur (10) nach einem der vorangehenden Ansprüche, **dadurch gekennzeichnet, dass** der Kolben (7) und die Zentralausnehmung (6) kegelstumpfförmig ausgebildet sind.

9. Anschlussarmatur (10) nach einem der vorangehenden Ansprüche, **dadurch gekennzeichnet, dass** die Freistellungen (11a, 11b, 11c) durch Dichtelemente, insbesondere Dichtringe, voneinander abgedichtet oder getrennt sind.

10. Anschlussarmatur (10) nach einem der vorangehenden Ansprüche, **dadurch gekennzeichnet, dass** der Kolben (7) manuell oder mittels eines Motors, insbesondere Stepper- oder Schrittmotors, oder einer Feder (33) verstellbar ausgebildet ist.

11. Anschlussarmatur (10) nach einem der vorangehenden Ansprüche, **dadurch gekennzeichnet, dass** der Vorlaufabgabestutzen (3) und/oder der Rücklaufannahmestutzen (4) und/oder der Vorlaufannahmestutzen (2) und der Rücklaufabgabestutzen (5) parallel zueinander angeordnet sind.

12. Anschlussarmatur (10) nach einem der Ansprüche 1 bis 11, **dadurch gekennzeichnet, dass** die Anschlussarmatur (10) als Eckanschlussarmatur ausgebildet ist, wobei der Vorlaufannahmestutzen (2) und der Rücklaufabgabestutzen (4) parallel zueinander angeordnet sind,
wobei der Vorlaufabgabestutzen (3) und der Rücklaufannahmestutzen (5) parallel zueinander angeordnet sind und
wobei der Vorlaufannahmestutzen (2) mit dem Vorlaufabgabestutzen (3) und der Rücklaufabgabestutzen (4) mit dem Rücklaufannahmestutzen (5) jeweils in einem Winkel von 90° angeordnet sind.

13. Anschlussarmatur (10) nach einem der vorangehenden Ansprüche, **dadurch gekennzeichnet, dass** der Vorlaufannahmestutzen (2) und/oder der Vorlaufabgabestutzen (3) und/oder der Rücklaufabgabestutzen (4) und/oder der Rücklaufannahmestutzen (5) als Steckanschluss oder Klemmringverschraubung ausgebildet sind.

14. Anschlussarmatur (10) nach einem der vorangehenden Ansprüche, **dadurch gekennzeichnet dass** die Anschlussarmatur (10) zwei Vorlaufannahmestutzen (2a, 2b) und zwei Rücklaufabgabestutzen (4a, 4b) aufweist,
wobei jeweils die Achsen eines der Vorlaufannahmestutzen (2a, 2b) zu jeweils der Achse eines Rücklaufabgabestutzen (4a, 4b) parallel angeordnet ist,
wobei der erste Vorlaufannahmestutzen (2a) in der Längsachse (8) des Kolbens (7) senkrecht zum zweiten Vorlaufannahmestutzen (2b) angeordnet ist, und
wobei der erste Rücklaufabgabestutzen (4a) in der Längsachse (8) des Kolbens (7) senkrecht zum zweiten Rücklaufabgabestutzen (4b) angeordnet ist.

15. Anschlussarmatur (10) nach einem der vorangehenden Ansprüche, **dadurch gekennzeichnet, dass** am Gehäuse (1) und/oder dem Kolben (7) Markierungen zur Anzeige der Stellung des Kolbens (7) angeordnet sind.

16. Anschlussarmatur (10) nach einem der vorangehenden Ansprüche, **dadurch gekennzeichnet, dass** das Gehäuse (1) und/oder der Kolben (7) aus Messing oder einem Kunststoff, insbesondere hergestellt durch ein Spritzgussverfahren, oder aus Hostaform oder Thermofor bestehen.

## Claims

1. Connection fitting (10) for controlling the flow direction of a heating medium in a heating body, the connection fitting (10) comprising a housing (1) and in particular being configured as a tap block,
wherein the connection fitting (10) has, for connecting a heating body to the flow and return line of a heating system, a flow receiving connection (2) for connection to a flow line and a return discharge connection (4) for connection to a return line,
- wherein the connection fitting (10) has a flow discharge connection (3) for connection to the flow connection of a heating body and a return receiving connection (5) for connection to the return line of a heating body,
wherein the housing (1) has a central recess (6), which is in particular arranged normal to the flow receiving connection (2) and/or flow discharge connection (3) and/or return discharge connection (4) and/or return receiving connection (5) and which connects the flow receiving connection (2), the flow discharge connection (3), the return discharge connection (4) and the return receiving connection (5) to one another in a fluid-transmitting manner,
wherein a piston (7) that can be displaced along its longitudinal axis (8) is arranged in the central recess (6) and can be placed against the wall of the central recess (6) at least at certain parts of its circumference,
- wherein the piston (7) has at least one channel (9) that extends in the interior of the piston (7),
- wherein the piston (7) has a number of clearances (11), each extending over a part of the circumference of the piston (7) and being spaced apart from each other and separated in a fluid-tight manner by the material of the piston (7) or sealing elements,
**characterised in that** the piston (7) can be displaced along its longitudinal axis (8) from a parallel flow position to a transverse flow position,
wherein the channel (9) and the clearances (11) are configured and arranged relative to each other in such a way
- that, in the parallel flow position of the piston (7), heating medium can flow from the flow receiving connection (2) via the channel (9) or one of the clearances (11) to the flow discharge connection (3) and heating medium can flow from the return receiving connection (5) via the channel (9) or one of the clearances (11) to the return discharge connection (4) and the flow of heating medium from the flow receiving connection (2) to the return discharge connection (4) and to the return receiving connection (5) and vice versa is prevented, and
- that, in the transverse flow position of the piston (7), heating medium can flow from the flow receiving connection (2) via the channel (9) or one of the clearances (11) to the return receiving connection (5) and heating medium can flow from the flow discharge connection (3) via the channel (9) or one of the clearances (11) to the return discharge connection (4), and the flow of heating medium from the flow receiving connection (2) to the return discharge connection (4) and to the flow discharge connection (3) and vice versa is prevented.

2. Connection fitting (10) according to claim 1, **characterised in that** the piston (7) can be displaced along its longitudinal axis (8) from a parallel flow position to a transverse flow position and a shut-off position,
wherein the channel (9) and the clearances (11) are configured and arranged relative to each other in such a way
that in the shut-off position of the piston (7) the flow of heating medium through the connection fitting is prevented.

3. Connection fitting (10) according to any one of the preceding claims, **characterised in that** the piston (7) can be displaced along its longitudinal axis (8) from a parallel flow position to a transverse flow position and a shut-off position or a bypass position,
wherein the channel (9) and the clearances (11) are configured and arranged relative to each other in such a way
that, in the bypass position of the piston (7), heating medium can flow from the flow receiving connection (2) to the return discharge connection (4) or vice versa and the flow of heating medium to the flow discharge connection (3) and the return receiving connection (5) is prevented.

4. Connection fitting (10) according to any one of the preceding claims, **characterised in that** the axes of the flow receiving connection (2) and the flow discharge connection (3) lie in a flow plane (20) that is arranged normal to the longitudinal axis (8) of the piston (7), and **in that** the return discharge connection (4) and return receiving connection (5) lie in a return plane (21) that is arranged normal to the longitudinal axis (8) of the piston (7), the flow plane (20) and the return plane (21) being spaced apart from one another along the longitudinal axis (8),
**in that** the piston (7) has two clearances (11a, 11b), the first clearance (11a) extending over a circumferential section of the piston (7) in the region of the flow plane (20) and the second clearance (11b) extending over a circumferential section of the piston (7) in the region of the return plane (21),
**in that** the piston (7) has two channels (9a, 9b), the channels (9a, 9b) each having a parallel section (12a, 12b) extending parallel to the longitudinal axis (8) of the piston (7) and each having two radial sections (13a, 13b, 14a, 14b) extending normal to the longitudinal axis (8) of the piston (7),
wherein the parallel sections (12a, 12b) each extend into the region of the flow plane (20) and return plane (21),
wherein in each case the first radial section (13a, 14a) of the channels (9a, 9b) is arranged in the region of the flow plane (20) and the second radial section (13b, 14b) of the channels (9a, 9b) is arranged in the region of the return plane (21),
wherein the first radial section (13a) of the first channel (9a) opens into the first clearance (11a) and the second radial section (13b) of the first channel (9a) opens into the region of the piston (7) not cleared by the second clearance (11b) in the circumferential surface thereof,
wherein the first radial section (14a) of the second channel (9b) opens into the region of the piston (7) not cleared by the first clearance (11a) in the circumferential surface thereof and the second radial section (14b) of the second channel (9b) opens into the second clearance (11b).

5. Connection fitting (10) according to any one of claims 1 to 3, **characterised in that** the axes of the flow receiving connection (2) and the flow discharge connection (3) lie in a flow plane (20) that is arranged normal to the longitudinal axis (8) of the piston (7), and **in that** the return discharge connection (4) and return receiving connection (5) lie in a return plane (21) that is arranged normal to the longitudinal axis (8) of the piston (7), the flow plane (20) and the return plane (21) being spaced apart from one another along the longitudinal axis (8),
**in that** the piston (7) has a channel (9) and three clearances (11a, 11b, 11c),
wherein the first clearance (11a) extends over a circumferential section of the piston (7) in the region of the flow plane (20) and the second clearance (11b) extends over a circumferential section of the piston (7) in the region of the return plane (21), wherein the first clearance (11a) and the second clearance (11b) extend over the same circumferential section of the piston,
wherein the central clearance (11c) is arranged between the first clearance (11a) and the second clearance (11b) and is separated therefrom by non-exposed material of the piston (7) or sealing elements and has a course that is arranged substantially diagonally over the circumference with respect to the longitudinal axis (8) of the piston (7) from the flow plane (20) to the return plane (21),
wherein the channel (9) has a parallel section (12) extending parallel to the longitudinal axis (8), in particular in the longitudinal axis (8), of the piston (7) and two radial sections (13a, 13b) extending normal to the longitudinal axis (9) of the piston,
wherein the first radial section (13a) is arranged in the region of the flow plane (20) and extends from the parallel section (12) of the channel (9) outwards into the non-exposed region of the piston (7) and opens into the circumferential surface thereof,
wherein the second radial section (13b) is arranged in the region of the return plane (21) and extends from the parallel section (12) of the channel (9) outwards into the non-exposed region of the piston (7) and opens into the circumferential surface thereof,
wherein the mouth of the first radial section (13a) and the mouth of the second radial section (13b) are arranged on the circumference of the piston offset from each other by 180° and are respectively arranged in the flow plane (20) and the return plane (21) offset by 180° from the third clearance (11c).

6. Connection fitting (10) according to any one of claims 1 to 3, **characterised in that** the axes of the flow receiving connection (2) and the flow discharge connection (3) lie in a flow plane (20) that is arranged normal to the longitudinal axis (8) of the piston (7), and **in that** the return discharge connection (4) and return receiving connection (5) lie in a return plane (21) that is arranged normal to the longitudinal axis (8) of the piston (7), the flow plane (20) and the return plane (21) being spaced apart from one another along the longitudinal axis (8),
wherein the piston (7) comprises an outer piston part (30) and an inner piston part (31), wherein the outer piston part (30) is configured in the shape of a hollow cylinder and can be placed at its outer circumference against the wall of the central recess (6) at least in parts and can be adjusted in the central recess (6) along the longitudinal axis (8) of the piston (7),
wherein the inner piston part (31) is arranged in the outer piston part (30) and can be placed with its outer circumference against the inner circumference of the outer piston part (30) at least in parts and can be adjusted relative to the outer piston part (30) along the longitudinal axis (8) of the piston (7),
wherein the channel (9) extends in the interior of the inner piston part (31), in particular along the longitudinal axis (8),
wherein the flow receiving connection (2), the flow discharge connection (3), the return discharge connection (4) and the return receiving connection (5) are each connected in a fluid-transmitting manner to the central recess (6) via an opening (33a, 33b, 33c, 33d), wherein the openings (33a, 33b) of the flow receiving connection (2) and of the flow discharge connection (3) are arranged in the flow plane (20) in each case in the direction of the longitudinal axis (8) on opposite sides of the flow plane (20) and are spaced apart from one another in the direction of the longitudinal axis (8), wherein the opening (33c, 33d) of the return discharge connection (4) and of the return receiving connection (5) are arranged in the return plane (21) in each case in the direction of the longitudinal axis (8) on opposite sides of the return plane (21) and are spaced apart from one another in the direction of the longitudinal axis (8),
wherein the outer piston part (30) has four windows (34a, 34b, 34c, 34d), which are arranged one behind the other on the circumference of the outer piston part (30) in the direction of the longitudinal axis (8) and are spaced apart from one another, wherein the distance between the first window (34a) and the second window (34b) in the direction of the longitudinal axis (8) corresponds approximately to the distance between the openings (33a, 33b) of the flow receiving connection (2) and the flow discharge connection (3), wherein the distance between the third window (34c) and the fourth window (34d) in the direction of the longitudinal axis (8) corresponds approximately to the distance between the openings (33c, 33d) of the return receiving connection (5) and the return discharge connection (4), and wherein the distance between the second window (34b) and the third window (34c) in the direction of the longitudinal axis (8) corresponds approximately to the distance between the openings (33b, 33c) of the return receiving connection (5) and the flow receiving connection (2),
wherein in each case in the region of the four windows (34a, 34b, 34c, 34d) in each case one clearance (11a, 11b, 11c, 11d) is provided, which in each case extends over the outer circumference of the outer piston part (30) and is in each case separated in a fluid-tight manner from the adjacent clearance (11a, 11b, 11c, 11d) by at least one web (36a, 36b, 36c), in particular comprising a groove for the introduction of a seal,
wherein the inner piston part (31) has a flow opening (35), which connects the channel (9) to the outer circumference of the inner piston part (31), and a circumferential clearance (37) extending over the outer circumference of the inner piston part (31) along the longitudinal axis (8), wherein the distance from the end of the inner piston part (31), which is located in the flow plane (20), to the flow opening (35) is approximately equal to the distance from the flow plane (20) to the return plane (21),
and wherein the length of the circumferential clearance (37) in the direction of the longitudinal axis (8) is approximately equal to the distance between the second window (34b) and the third window (34c) in the direction of the longitudinal axis (8).

7. Connection fitting (10) according to any one of the preceding claims, **characterised in that** the clearances (11a, 11b, 11c) extend over a circumferential range with an angle of 180° to 280°, in particular 220° to 260°.

8. Connection fitting (10) according to any one of the preceding claims, **characterised in that** the piston (7) and the central recess (6) are frustoconical.

9. Connection fitting (10) according to any one of the preceding claims, **characterised in that** the clearances (11a, 11b, 11c) are sealed or separated from one another by sealing elements, in particular sealing rings.

10. Connection fitting (10) according to any one of the preceding claims, **characterised in that** the piston (7) is configured to be adjustable manually or by means of a motor, in particular a stepper motor, or a spring (33).

11. Connection fitting (10) according to any one of the preceding claims, **characterised in that** the flow discharge connection (3) and/or the return receiving connection (4) and/or the flow receiving connection (2) and the return discharge connection (5) are arranged parallel to one another.

12. Connection fitting (10) according to any one of claims 1 to 11, **characterised in that** the connection fitting (10) is configured as a corner connection fitting, the flow receiving connection (2) and the return discharge connection (4) being arranged parallel to one another,
wherein the flow discharge connection (3) and the return receiving connection (5) are arranged parallel to each other and
wherein the flow receiving connection (2) is arranged with the flow discharge connection (3) and the return discharge connection (4) is arranged with the return receiving connection (5) at an angle of 90°.

13. Connection fitting (10) according to any one of the preceding claims, **characterised in that** the flow receiving connection (2) and/or the flow discharge connection (3) and/or the return discharge connection (4) and/or the return receiving connection (5) are configured as a plug-in connection or clamping ring screw connection.

14. Connection fitting (10) according to any one of the preceding claims, **characterised in that** the connection fitting (10) has two flow receiving connections (2a, 2b) and two return discharge connections (4a, 4b),
wherein the axes of one of the flow receiving connections (2a, 2b) is arranged parallel to the axis of one of the return discharge connections (4a, 4b),
wherein the first flow receiving connection (2a) is arranged in the longitudinal axis (8) of the piston (7) perpendicular to the second flow receiving connection (2b), and
wherein the first return discharge connection (4a) is arranged in the longitudinal axis (8) of the piston (7) perpendicular to the second return discharge connection (4b).

15. Connection fitting (10) according to any one of the preceding claims, **characterised in that** markings to indicate the position of the piston (7) are arranged on the housing (1) and/or the piston (7).

16. Connection fitting (10) according to any one of the preceding claims, **characterised in that** the housing (1) and/or the piston (7) are made of brass or a plastic, in particular manufactured by an injection moulding process, or of Hostaform or Thermofor.

## Revendications

1. Armature de raccordement (10) pour la commande du sens de flux d'un milieu de chauffage dans un corps chauffant, dans laquelle l'armature de raccordement (10) comporte un boîtier (1) et est réalisée en particulier comme bloc robinet,
dans laquelle l'armature de raccordement (10) présente pour le raccordement d'un corps chauffant à la canalisation montante et descendante d'une installation de chauffage une tubulure de réception de canalisation montante (2) pour le raccordement à une canalisation montante et une tubulure de sortie de canalisation descendante (4) pour le raccordement à une canalisation descendante,
- dans laquelle l'armature de raccordement (10) présente une tubulure de sortie de canalisation montante (3) pour le raccordement au raccord de canalisation montante d'un corps chauffant et une tubulure de réception de canalisation descendante (5) pour le raccordement à la canalisation descendante d'un corps chauffant,
dans laquelle le boîtier (1) présente un évidement central (6) agencé en particulier normalement à la tubulure de réception de canalisation montante (2) et/ou tubulure de sortie de canalisation montante (3) et/ou tubulure de sortie de canalisation descendante (4) et/ou tubulure de réception de canalisation descendante (5) qui relie entre elles de manière à transmettre le fluide la tubulure de réception de canalisation montante (2), la tubulure de sortie de canalisation montante (3), la tubulure de sortie de canalisation descendante (4) et la tubulure de réception de canalisation descendante (5),
dans laquelle un piston (7) mobile le long de son axe longitudinal (8) est agencé dans l'évidement central (6), lequel peut être posé au moins par sections sur sa périphérie contre la paroi de l'évidement central (6),
- dans laquelle le piston (7) présente au moins un canal (9) s'étendant à l'intérieur du piston (7),
- dans laquelle le piston (7) présente un nombre de libérations (11) qui s'étendent respectivement sur une partie de la périphérie du piston (7) et sont espacées les unes des autres et sont séparées de manière étanche au fluide par le matériau du piston (7) ou des éléments étanches,
**caractérisée en ce que** le piston (7) est mobile d'une position d'écoulement en parallèle dans une position d'écoulement en croix le long de son axe longitudinal (8),
dans laquelle le canal (9) et les libérations (11) sont réalisés et agencés les uns par rapport aux autres de telle manière
- que dans la position d'écoulement en parallèle du piston (7), du milieu de chauffage puisse s'écouler de la tubulure de réception de canalisation montante (2) par le biais du canal (9) ou de l'une des libérations (11) à la tubulure de sortie de canalisation montante (3) et du milieu de chauffage puisse s'écouler de la tubulure de réception de canalisation descendante (5) par le biais du canal (9) ou de l'une des libérations (11) à la tubulure de sortie de canalisation descendante (4) et le débit du milieu de chauffage de la tubulure de réception de canalisation montante (2) à la tubulure de sortie de canalisation descendante (4) et à la tubulure de réception de canalisation descendante (5) et inversement soit empêché, et
- que dans la position d'écoulement en croix du piston (7), du milieu de chauffage puisse s'écouler de la tubulure de réception de canalisation montante (2) par le biais du canal (9) ou de l'une des libérations (11) à la tubulure de sortie de canalisation montante (5) et du milieu de chauffage puisse s'écouler de la tubulure de réception de canalisation montante (3) par le biais du canal (9) ou de l'une des libérations (11) à la tubulure de sortie de canalisation descendante (4) et le débit du milieu de chauffage de la tubulure de réception de canalisation montante (2) à la tubulure de sortie de canalisation descendante (4) et à la tubulure de sortie de canalisation montante (3) et inversement soit empêché.

2. Armature de raccordement (10) selon la revendication 1, **caractérisée en ce que** le piston (7) est mobile d'une position d'écoulement en parallèle dans une position d'écoulement en croix et une position de blocage le long de son axe longitudinal (8),
dans laquelle le canal (9) et les libérations (11) sont réalisés et agencés les uns par rapport aux autres de telle manière
que dans la position de blocage du piston (7), le débit du milieu de chauffage par l'armature de raccordement soit empêché.

3. Armature de raccordement (10) selon l'une quelconque des revendications précédentes, **caractérisée en ce que** le piston (7) est mobile d'une position d'écoulement en parallèle dans une position d'écoulement en croix et une position de blocage ou une position de dérivation le long de son axe longitudinal (8),
dans laquelle le canal (9) et les libérations (11) sont réalisés et agencés les uns par rapport aux autres de telle manière
que dans la position de dérivation du piston (7), du milieu de chauffage puisse s'écouler de la tubulure de réception de canalisation montante (2) à la tubulure de sortie de canalisation descendante (4) ou inversement et le débit du milieu de chauffage à la tubulure de sortie de canalisation montante (3) et la tubulure de réception de canalisation descendante (5) soit empêché.

4. Armature de raccordement (10) selon l'une quelconque des revendications précédentes, **caractérisée en ce que** les axes de la tubulure de réception de canalisation montante (2) et de la tubulure de sortie de canalisation montante (3) se trouvent dans un plan de canalisation montante (20) qui est agencé normalement à l'axe longitudinal (8) du piston (7) et que la tubulure de sortie de canalisation descendante (4) et la tubulure de réception de canalisation descendante (5) se trouvent dans un plan de canalisation descendante (21) qui est agencé normalement à l'axe longitudinal (8) du piston (7), dans laquelle le plan de canalisation montante (20) et le plan de canalisation descendante (21) sont espacés l'un de l'autre le long de l'axe longitudinal (8),
**en ce que** le piston (7) présente deux libérations (11a, 11b), dans laquelle la première libération (11a) s'étend sur une section périphérique du piston (7) dans la zone du plan de canalisation montante (20) et la deuxième libération (11b) s'étend sur une section périphérique du piston (7) dans la zone du plan de canalisation descendante (21),
**en ce que** le piston (7) présente deux canaux (9a, 9b), dans laquelle les canaux (9a, 9b) présentent respectivement une section parallèle (12a, 12b) s'étendant parallèlement à l'axe longitudinal (8) du piston (7) et respectivement deux sections radiales (13a, 13b, 14a, 14b) s'étendant normalement à l'axe longitudinal (8) du piston (7),
dans laquelle les sections parallèles (12a, 12b) s'étendent respectivement dans la zone du plan de canalisation montante (20) et du plan de canalisation descendante (21),
dans laquelle respectivement la première section radiale (13a, 14a) des canaux (9a, 9b) est agencée dans la zone du plan de canalisation montante (20) et la seconde section radiale (13b, 14b) des canaux (9a, 9b) est agencée dans la zone du plan de canalisation descendante (21),
dans laquelle la première section radiale (13a) du premier canal (9a) débouche dans la première libération (11a) et la seconde section radiale (13b) du premier canal (9a) débouche dans la zone non libérée par la deuxième libération (11b) du piston (7) dans sa surface périphérique,
dans laquelle la première section radiale (14a) du second canal (9b) débouche dans la zone non libérée par la première libération (11a) du piston (7) dans sa surface périphérique et la seconde section radiale (14b) du second canal (9b) débouche dans la deuxième libération (11b).

5. Armature de raccordement (10) selon l'une quelconque des revendications 1 à 3, **caractérisée en ce que** les axes de la tubulure de réception de canalisation montante (2) et de la tubulure de sortie de canalisation montante (3) se trouvent dans un plan de canalisation montante (20) qui est agencé normalement à l'axe longitudinal (8) du piston (7) et que la tubulure de sortie de canalisation descendante (4) et la tubulure de réception de canalisation descendante (5) se trouvent dans un plan de canalisation descendante (21) qui est agencé normalement à l'axe longitudinal (8) du piston (7), dans laquelle le plan de canalisation montante (20) et le plan de canalisation descendante (21) sont espacés l'un de l'autre le long de l'axe longitudinal (8),
**en ce que** le piston (7) présente un canal (9) et trois libérations (11a, 11b, 11c),
dans laquelle la première libération (11a) s'étend sur une section périphérique du piston (7) dans la zone du plan de canalisation montante (20) et la deuxième libération (11b) s'étend sur une section périphérique du piston (7) dans la zone du plan de canalisation descendante (21), dans laquelle la première libération (11a) et la deuxième libération (11b) s'étendent sur la même section périphérique du piston,
dans laquelle la libération (11c) médiane est agencée entre la première libération (11a) et la deuxième libération (11b) et est séparée de celles-ci par du matériau non libéré du piston (7) ou des éléments étanches et présente une étendue agencée en diagonale sensiblement sur la périphérie par rapport à l'axe longitudinal (8) du piston (7) du plan de canalisation montante (20) au plan de canalisation descendante (21),
dans laquelle le canal (9) présente une section parallèle (12) s'étendant parallèlement à l'axe longitudinal (8), en particulier dans l'axe longitudinal (8), du piston (7) et deux sections radiales (13a, 13b) s'étendant normalement à l'axe longitudinal (9) du piston,
dans laquelle la première section radiale (13a) est agencée dans la zone du plan de canalisation montante (20) et s'étend de la section parallèle (12) du canal (9) vers l'extérieur dans la zone non libérée du piston (7) et débouche dans sa surface périphérique,
dans laquelle la seconde section radiale (13b) est agencée dans la zone du plan de canalisation descendante (21) et s'étend de la section parallèle (12) du canal (9) vers l'extérieur dans la zone non libérée du piston (7) et débouche dans sa surface périphérique,
dans laquelle l'embouchure de la première section radiale (13a) et l'embouchure de la seconde section radiale (13b) sont agencées sur la périphérie du piston décalées de plus de 180° l'une par rapport à l'autre et sont agencées respectivement dans le plan de canalisation montante (20) et le plan de canalisation descendante (21) décalées de 180° par rapport à la troisième libération (11c).

6. Armature de raccordement (10) selon l'une quelconque des revendications 1 à 3, **caractérisée en ce que** les axes de la tubulure de réception de canalisation montante (2) et de la tubulure de sortie de canalisation montante (3) se trouvent dans un plan de canalisation montante (20) qui est agencé normalement par rapport à l'axe longitudinal (8) du piston (7) et que la tubulure de sortie de canalisation descendante (4) et la tubulure de réception de canalisation descendante (5) se trouvent dans un plan de canalisation descendante (21) qui est agencé normalement par rapport à l'axe longitudinal (8) du piston (7), dans laquelle le plan de canalisation montante (20) et le plan de canalisation descendante (21) sont espacés l'un de l'autre le long de l'axe longitudinal (8),
dans laquelle le piston (7) comporte une partie de piston extérieure (30) et une partie de piston intérieure (31), dans laquelle la partie de piston extérieure (30) est réalisée en forme de cylindre creux et peut être posée au moins par sections sur sa périphérie extérieure contre la paroi de l'évidement central (6) et est réglable dans l'évidement central (6) le long de l'axe longitudinal (8) du piston (7),
dans laquelle la partie de piston intérieure (31) est agencée dans la partie de piston extérieure (30) et peut être posée au moins par sections avec sa périphérie extérieure contre la périphérie intérieure de la partie de piston extérieure (30) et est réglable de manière relative par rapport à la partie de piston extérieure (30) le long de l'axe longitudinal (8) du piston (7),
dans laquelle le canal (9) s'étend à l'intérieur de la partie de piston (31) intérieure, en particulier dans l'axe longitudinal (8),
dans laquelle la tubulure de réception de canalisation montante (2), la tubulure de sortie de canalisation montante (3), la tubulure de sortie de canalisation descendante (4) et la tubulure de réception de canalisation descendante (5) sont reliées à l'évidement central (6) respectivement par le biais d'une ouverture de passage (33a, 33b, 33c, 33d) de manière à transmettre le fluide, dans laquelle les ouvertures de passage (33a, 33b) de la tubulure de réception de canalisation montante (2) et de la tubulure de sortie de canalisation montante (3) sont agencées dans le plan de canalisation montante (20) respectivement en direction de l'axe longitudinal (8) sur des côtés opposés du plan de canalisation montante (20) et sont espacées les unes des autres en direction de l'axe longitudinal (8), dans laquelle les ouvertures de passage (33c, 33d) de la tubulure de sortie de canalisation descendante (4) et de la tubulure de réception de canalisation descendante (5) sont agencées dans le plan de canalisation descendante (21) respectivement en direction de l'axe longitudinal (8) sur des côtés opposés du plan de canalisation descendante (21) et sont espacées en direction de l'axe longitudinal (8) les unes par rapport aux autres,
dans laquelle la partie de piston extérieure (30) présente quatre fenêtres de passage (34a, 34b, 34c, 34d) qui sont agencées respectivement sur la périphérie de la partie de piston extérieure (30) en direction de l'axe longitudinal (8) les unes derrière les autres et sont espacées les unes des autres, dans laquelle la distance entre la première fenêtre de passage (34a) et la deuxième fenêtre de passage (34b) correspond en direction de l'axe longitudinal (8) à peu près à la distance entre les ouvertures de passage (33a, 33b) de la tubulure de réception de canalisation montante (2) et de la tubulure de réception de canalisation montante (3), dans laquelle la distance entre la troisième fenêtre de passage (34c) et la quatrième fenêtre de passage (34d) correspond en direction de l'axe longitudinal (8) à peu près à la distance entre les ouvertures de passage (33c, 33d) de la tubulure de réception de canalisation descendante (5) et de la tubulure de sortie de canalisation descendante (4), et dans laquelle la distance entre la deuxième fenêtre de passage (34b) et la troisième fenêtre de passage (34c) correspond en direction de l'axe longitudinal (8) à peu près à la distance entre les ouvertures de passage (33b, 33c) de la tubulure de réception de canalisation descendante (5) et de la tubulure de réception de canalisation montante (2),
dans laquelle dans chaque cas dans la zone des quatre fenêtres de passage (34a, 34b, 34c, 34d), dans chaque cas une libération (11a, 11b, 11c, 11d) est prévue, laquelle s'étend sur la périphérie extérieure de la partie de piston extérieure (30) et est dans chaque cas séparée de manière étanche au fluide de la libération (11a, 11b, 11c, 11d) contiguë par au moins une nervure (36a, 36b, 36c), en particulier comprenant une rainure pour l'introduction d'une garniture étanche,
dans laquelle la partie de piston intérieure (31) présente une ouverture d'écoulement (35) qui relie le canal (9) à la périphérie extérieure de la partie de piston intérieure (31), et une libération de périphérie (37) s'étendant sur la périphérie extérieure de la partie de piston intérieure (31) le long de l'axe longitudinal (8), dans laquelle la distance de l'extrémité de la partie de piston intérieure (31) qui est agencée dans le plan de canalisation montante (20), à l'ouverture d'écoulement (35) correspond à peu près à la distance du plan de canalisation montante (20) au plan de canalisation descendante (21),
et dans laquelle la longueur de la libération de périphérie (37) correspond en direction de l'axe longitudinal (8) à peu près à la distance entre la deuxième de fenêtre de passage (34b) et la troisième fenêtre de passage (34c) en direction de l'axe longitudinal (8).

7. Armature de raccordement (10) selon l'une quelconque des revendications précédentes, **caractérisée en ce que** les libérations (11a, 11b, 11c) s'étendent sur une zone périphérique avec un angle de 180° à 280°, en particulier de 220° à 260°.

8. Armature de raccordement (10) selon l'une quelconque des revendications précédentes, **caractérisée en ce que** le piston (7) et l'évidement central (6) sont réalisés en forme de cône tronqué.

9. Armature de raccordement (10) selon l'une quelconque des revendications précédentes, **caractérisée en ce que** les libérations (11a, 11b, 11c) sont rendues étanches ou séparées les unes des autres par des éléments étanches, en particuliers des anneaux étanches.

10. Armature de raccordement (10) selon l'une quelconque des revendications précédentes, **caractérisée en ce que** le piston (7) est réalisé de manière réglable manuellement ou au moyen d'un moteur, en particulier un moteur stepper ou pas-à-pas, ou un ressort (33).

11. Armature de raccordement (10) selon l'une quelconque des revendications précédentes, **caractérisée en ce que** la tubulure de sortie de canalisation montante (3) et/ou la tubulure de réception de canalisation descendante (4) et/ou la tubulure de réception de canalisation montante (2) et la tubulure de sortie de canalisation descendante (5) sont agencées parallèlement les unes aux autres.

12. Armature de raccordement (10) selon l'une quelconque des revendications 1 à 11, **caractérisée en ce que** l'armature de raccordement (10) est réalisée comme armature de raccordement d'angle, dans laquelle la tubulure de réception de canalisation montante (2) et la tubulure de sortie de canalisation descendante (4) sont agencées parallèlement l'une à l'autre,
dans laquelle la tubulure de sortie de canalisation montante (3) et la tubulure de réception de canalisation descendante (5) sont agencées parallèlement l'une à l'autre et
dans laquelle la tubulure de réception de canalisation montante (2) est agencée avec la tubulure de sortie de canalisation montante (3) et la tubulure de sortie de canalisation descendante (4) est agencée avec la tubulure de réception de canalisation descendante (5) selon un angle de 90°.

13. Armature de raccordement (10) selon l'une quelconque des revendications précédentes, **caractérisée en ce que** la tubulure de réception de canalisation montante (2) et/ou la tubulure de sortie de canalisation montante (3) et/ou la tubulure de sortie de canalisation descendante (4) et/ou la tubulure de réception de canalisation descendante (5) sont réalisées comme raccord enfichable ou vissage d'anneau de serrage.

14. Armature de raccordement (10) selon l'une quelconque des revendications précédentes, **caractérisée en ce que** l'armature de raccordement (10) présente deux tubulures de réception de canalisation montante (2a, 2b) et deux tubulures de sortie de canalisation descendante (4a, 4b),
dans laquelle respectivement les axes d'une des tubulures de réception de canalisation montante (2a, 2b) sont agencés parallèlement à respectivement l'axe d'une tubulure de sortie de canalisation descendante (4a, 4b),
dans laquelle la première tubulure de réception de canalisation montante (2a) est agencée dans l'axe longitudinal (8) du piston (7) perpendiculairement à la seconde tubulure de réception de canalisation montante (2b), et
dans laquelle la première tubulure de sortie de canalisation descendante (4a) est agencée dans l'axe longitudinal (8) du piston (7) perpendiculairement à la seconde tubulure de sortie de canalisation descendante (4b).

15. Armature de raccordement (10) selon l'une quelconque des revendications précédentes, **caractérisée en ce que** des marquages pour l'affichage de la position du piston (7) sont agencés au niveau du boîtier (1) et/ou du piston (7).

16. Armature de raccordement (10) selon l'une quelconque des revendications précédentes, **caractérisée en ce que** le boîtier (1) et/ou le piston (7) se composent de laiton ou d'une matière plastique, en particulier fabriquée par un procédé de moulage par injection, ou de Hostaform ou de Thermofor.
